(19)

**Europäisches Patentamt**
**European Patent Office**
**Office européen des brevets**

(11) **EP 3 495 329 B1**

(12) **EUROPEAN PATENT SPECIFICATION**

(45) Date of publication and mention
of the grant of the patent:
**06.01.2021 Bulletin 2021/01**

(51) Int Cl.:
*C03B 37/018* $^{(2006.01)}$    *G02B 6/02* $^{(2006.01)}$
*G02B 6/028* $^{(2006.01)}$

(21) Application number: **17836960.9**

(22) Date of filing: **01.08.2017**

(86) International application number:
**PCT/JP2017/027891**

(87) International publication number:
**WO 2018/025857 (08.02.2018 Gazette 2018/06)**

(54) **OPTICAL FIBER MATRIX PRODUCTION METHOD AND OPTICAL FIBER PRODUCTION METHOD**

VERFAHREN ZUR HERSTELLUNG EINER FASEROPTISCHEN MATRIX UND VERFAHREN ZUR HERSTELLUNG EINER OPTISCHEN FASER

PROCÉDÉ DE PRODUCTION DE MATRICE DE FIBRE OPTIQUE ET PROCÉDÉ DE PRODUCTION DE FIBRE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2016 JP 2016151766**

(43) Date of publication of application:
**12.06.2019 Bulletin 2019/24**

(73) Proprietor: **Sumitomo Electric Industries, Ltd. Osaka-shi, Osaka 541-0041 (JP)**

(72) Inventors:
• **ENOMOTO Tadashi**
  **Yokohama-shi**
  **Kanagawa 244-8588 (JP)**
• **YONEZAWA Kazuhiro**
  **Yokohama-shi**
  **Kanagawa 244-8588 (JP)**

(74) Representative: **Hoffmann Eitle**
**Patent- und Rechtsanwälte PartmbB**
**Arabellastraße 30**
**81925 München (DE)**

(56) References cited:
**WO-A1-2015/116887      JP-A- S5 864 236**
**JP-A- S5 864 236          JP-A- 2001 019 461**
**JP-A- 2006 096 608      JP-A- 2006 096 608**
**US-A1- 2014 119 701**

• **MICHAEL A PICKERING ET AL: "Gradient infrared optical material prepared by a chemical vapor deposition process", APPLIED OPTICS,, vol. 25, no. 19, 1 October 1986 (1986-10-01), pages 3364-3372, XP001409216,**

**Description**

**Technical Field**

The present invention relates to an optical fiber preform production method.

**Background Art**

Generally, an optical fiber preform is produced by a preform production method including a step of producing a core preform to be a core after drawing and a step of producing a cladding preform (outer peripheral portion) to be provided on an outer peripheral surface of the core preform and to be a cladding after the drawing.

The step of producing the core preform includes a glass synthesis step and an aftertreatment step such as dehydration, sintering (including collapsing), and elongation, to be performed subsequent to the glass synthesis step. Particularly, in the glass synthesis step, for example, a glass preform is produced by stacking a plurality of glass layers. As a method of producing the glass preform, an outside approach type of chemical vapor deposition (CVD) method in which a glass layer is formed on an outer peripheral surface of a glass deposition substrate and an inside approach type of chemical vapor deposition (CVD) method in which the glass layer is formed on an inner peripheral surface of the glass deposition substrate are known.

Particularly, an outside vapor phase deposition (OVD) method disclosed in Patent Document 1 is known as an example of the outside approach type of CVD method and a plurality of glass layers are stacked by causing glass raw material gas supplied to an outer peripheral surface of a core rod prepared as the glass deposition substrate to be subjected to a flame hydrolysis reaction by an oxyhydrogen burner and depositing synthesized glass particles on the outer peripheral surface of the core rod.

On the other hand, a modified chemical vapor deposition (MCVD) method disclosed in Patent Document 2 and a plasma-activated chemical vapor deposition (PCVD) described in Patent Document 3 are known as examples of the inside approach type of CVD method. In both the MCVD method and the PCVD method, a hollow glass tube is used as the glass deposition substrate and the glass raw material gas introduced into the glass tube is subjected to an oxidation reaction, so that the synthesized glass particles are deposited on an inner peripheral surface of the glass tube. In the case of the MCVD method, the oxidation reaction in the glass tube is accelerated by heating the glass tube by the oxyhydrogen burner and in the case of the PCVD method, the oxidation reaction is accelerated by generating plasma in the glass tube by a high-frequency cavity disposed outside the glass tube.

The core preform having a refractive index profile according to a desired $\alpha$-profile is obtained via the above glass synthesis step and a multimode optical fiber (hereinafter, referred to as the "MMF") having a desired optical characteristic is obtained by drawing the optical fiber preform including the core preform.

For example, Patent Document 4 discloses technology for slightly modifying a refractive index profile of the core according to the $\alpha$-profile and obtaining the MMF having a wider bandwidth characteristic. Patent Document 5 discloses technology for controlling a deviation between the refractive index profile in the core and the $\alpha$-profile to be less than 0.0015% and obtaining the MMF having a bandwidth characteristic of 5000 MHz·km or more at an arbitrary wavelength included in a wavelength range of 800 nm or more. Furthermore, Patent Document 6 discloses an MMF production method that adjusts cladding synthesis as well as adjustment of a drawing tension and a core diameter, on the basis of a shape (fitting shape) of the refractive index profile of the core preform along a radial direction.

JP 2006-096608 A discloses a method for producing a multi-mode optical fiber preform capable of accurately forming refractive index distribution required for a GI-type multi-mode optical fiber. The method comprises the steps of introducing silicon tetrachloride, additives for adjusting the refractive index and a combustion gas into a burner to generate a flame while rotating a long mandrel around its axis, producing glass particulates by the flame, relatively moving the mandrel and the burner a plurality of times in the longitudinal direction of the mandrel to deposit the glass particulates on the outside of the mandrel, and heating the deposited glass particulates to be sintered. The production conditions are determined as follows: measuring the refractive index of each layer formed by every relative movement of an aforetime produced optical fiber preform to the burner and determining production conditions adapted to a target refractive index for each layer in the target refractive index distribution from the measured refractive index for each layer. The addition amount of the additives for adjusting the refractive index is adjusted according to the production conditions.

JP S58-64236 A discloses a method of manufacturing a base material for an optical fiber. When this base material is manufactured by an internal or external CVD method, in the stage for forming a refractive index distribution, the flow rate of gaseous $SiCl_4$ and/or the moving speed of a burner are changed every layer so as to adjust the radius of the n-th deposited glass layer of a base material obtained by making a quartz glass tube solid to $n^{1/p}$ (p is 0.4-1.6). The amount of oxide deposited from a gaseous dopant is also controlled every layer. Thus, the prescribed refractive index distribution is obtained.

**Citation List**

**Patent Literature**

Patent Document 1: US Patent No. 8815103
Patent Document 2: US Patent No. 7155098
Patent Document 3: US Patent No. 7759874
Patent Document 4: US Patent No. 6292612
Patent Document 5: US Patent Application Laid-Open No. 2014/0119701
Patent Document 6: US Patent Application Laid-Open No. 2013/0029038

**Summary of Invention**

**Technical Problem**

As a result of examining the conventional optical fiber preform production method, the inventors have found the following problems. That is, all of the production methods disclosed in the above Patent Documents 1 to 6 require a long time to match the shape of the refractive index profile in the produced core preform with an ideal curve with high precision. Specifically, a preform producer frequently adjusts a doping amount of a refractive index adjusting agent depending on experience and the adjustment of the doping amount is ambiguous. Furthermore, if basic production conditions are different, it is necessary to accumulate a large number of data (experience) again to adjust the doping amount of the refractive index adjusting agent.

The present invention has been made to solve the above problems and an object thereof is to provide an optical fiber preform production method having a structure for matching a shape of a refractive index profile in a core preform with an ideal curve with high precision and in a short time.

**Solution to Problem**

In order to achieve the above object, an optical fiber preform production method according to the present invention comprises, at least, a glass synthesis step and a pretreatment step executed prior to the glass synthesis step, to produce a core preform. In the glass synthesis step, the core preform which extends along a center axis and constitutes a part of an optical fiber preform and in which a refractive index profile defined along a radial direction on a cross-section orthogonal to the center axis is adjusted to a predetermined shape, is produced. The optical fiber preform production method of the present invention has the features of claim 1.

Particularly, in the glass synthesis step, as a glass preform to be the core preform, glass particles synthesized while a doping amount of a refractive index adjusting agent M is adjusted are sequentially stacked on an inner peripheral surface or an outer peripheral surface of a glass deposition substrate extending along a direction matched with the center axis. As a result, the glass preform having a cross-section in which a plurality of glass layers are concentrically arranged so as to be matched with the cross-section of the core preform and surround the center axis is produced. Further, in the pretreatment step, setting of a division section to be an unit of doping amount control for the refractive index adjusting agent M, creation of glass synthesis actual-result data, calculation of a correlation, and determination of a theoretical doping amount of the refractive index adjusting agent M in the glass synthesis step are performed for an arbitrarily set adjustment region of a core preform sample produced in the past. In the setting of the division section, for one of a cross-section of an i-th (=1 to m) core preform sample among m (an integer of 2 or more) core preform samples produced in the past and the number of glass layers constituting an i-th glass preform sample having become the i-th core preform sample, the adjustment region is divided into n (an integer of 2 or more) sections along the radial direction and for the other, a region corresponding to the adjustment region is divided along the radial direction to correspond to the n division sections divided as described above on one-to-one basis. The glass synthesis actual-result data includes actual measurement data of a relative refractive index difference of a k-th (=1 to n) division section in the i-th core preform sample as refractive index profile data and includes doping amount data of the refractive index adjusting agent M doped to the k-th division section in the i-th glass preform sample as production condition data. In the calculation of the correlation, a correlation between a deviation of the actual measurement data of the relative refractive index difference with respect to a target value and the doping amount data of the refractive index adjusting agent M is calculated from glass synthesis actual-result data of the k-th division section of each of the m core preform samples. In the determination of the theoretical doping amount, a theoretical doping amount of the refractive index adjusting agent M in which an absolute value of the deviation is minimized is obtained from the correlation in the k-th division section of each of the m core preform samples.

In the glass synthesis step, one or more glass layers belonging to a k-th glass synthesis section corresponding to the k-th division section of each of the m core preform samples are sequentially formed on the inner peripheral surface or the outer peripheral surface of the glass deposition substrate, in a state in which the doping amount of the refractive index adjusting agent M to be supplied at the time of synthesizing the glass particles is adjusted to the theoretical doping amount.

Each embodiment of the present invention can be more fully understood by the following detailed description and the accompanying drawings. These embodiments are merely exemplary and should not be considered as limiting the present invention.

An additional application range of the present invention will be apparent from the following detailed description. However, it should be understood that the detailed description and specific examples showing the preferred embodiments of the invention are merely exemplary and various modifications and improvements within a scope of the present invention will be obvious to those skilled in the art from the detailed description.

**Advantageous Effects of Invention**

According to the present embodiment, it is possible to match a shape of a refractive index profile in a core preform with an ideal curve with high precision and in a short time. Further, since variations of desired optical characteristics are suppressed between produced optical fibers, a production yield of the optical fibers can be improved.

**Brief Description of Drawings**

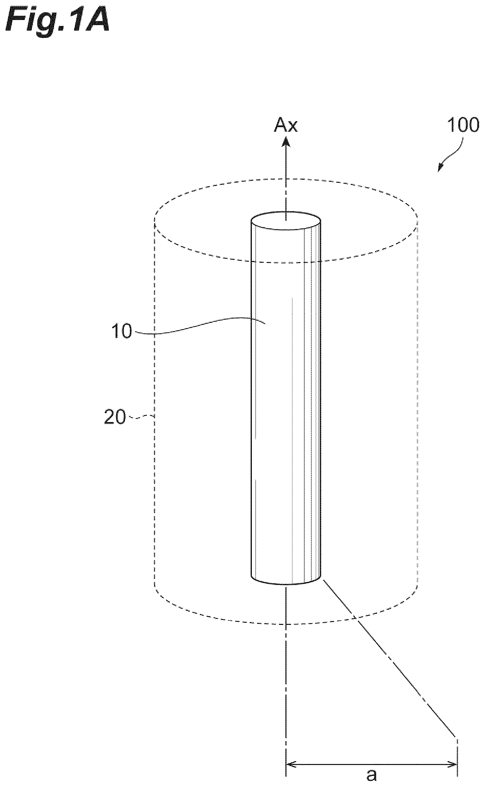

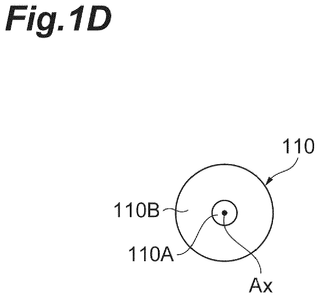

Fig. 1A is a diagram showing a structure of an optical fiber preform.

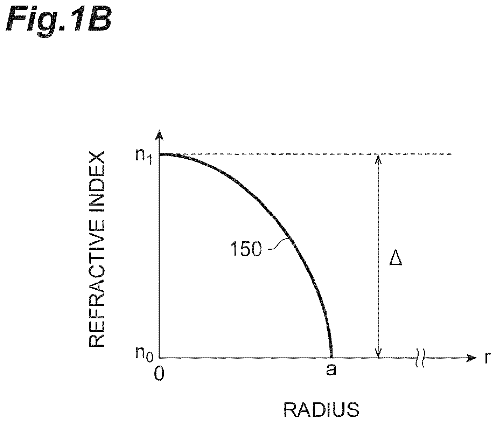

Fig. 1B shows a refractive index profile along a radial direction of the optical fiber preform of Fig. 1A.

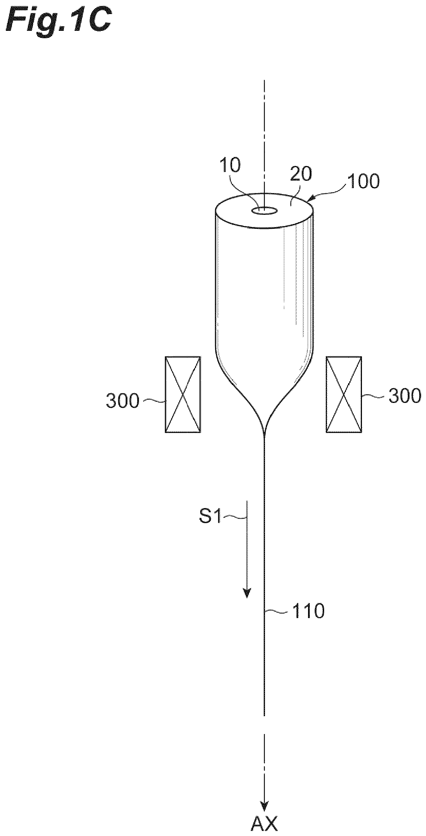

Fig. 1C is a diagram showing a drawing step of the optical fiber preform of Fig. 1A.

Fig. ID is a diagram showing a cross-sectional structure of an optical fiber obtained through the drawing step of Fig. 1C.

Fig. 2 is a flowchart illustrating a core preform production step ST100 in an optical fiber preform production method according to the present embodiment.

Fig. 3 is a flowchart illustrating an aftertreatment step ST130 in the core preform production step ST100 shown in Fig. 2.

Fig. 4A is a diagram showing a structure of an OVD production apparatus to execute a glass synthesis step ST120 by an OVD method as an outside approach type of CVD method for obtaining a glass preform for a core preform.

Fig. 4B is a diagram showing a structure of a material gas supply system in the OVD production apparatus of Fig. 4A.

Fig. 5A is a diagram showing a correspondence relation between a cross-section of the glass preform after the glass synthesis step ST120 and a cross-section of the core preform obtained by performing the aftertreatment step ST130 on the glass preform.

Fig. 5B is a diagram showing an example of a correspondence relation between a division section in the cross-section of the glass preform of Fig. 5A and a division section in the cross-section of the core preform of Fig. 5A.

Fig. 6A is a diagram showing a structure of an inside approach type of CVD production apparatus for producing the optical fiber preform, particularly, the glass preform for the core preform by an inside approach type of CVD method (an MCVD method or a PCVD method).

Fig. 6B is a diagram showing a structure of a material gas supply system in the inside approach type of CVD production apparatus of Fig. 6A.

Fig. 7A is a diagram showing a structure of a heating system for executing the MCVD method in the inside approach type of CVD production apparatus of Fig. 6A.

Fig. 7B is a diagram showing a structure of a heating system for executing the PCVD method in the inside approach type of CVD production apparatus of Fig. 6A.

Fig. 8 is a flowchart illustrating a pretreatment step ST110 in the core preform production step ST100 shown in Fig. 2.

Fig. 9A is a (first) diagram showing a structure of glass synthesis actual-result data created in the pretreatment step ST110.

Fig. 9B is a (second) diagram showing a structure of glass synthesis actual-result data created in the pretreatment step ST110.

Fig. 10 is a diagram illustrating calculation of a theoretical doping amount of Ge based on the glass synthesis actual-result data of Fig. 9B.

Fig. 11 is a flowchart illustrating the glass synthesis step ST120 in the core preform production step ST100 shown in Fig. 2.

**Description of Embodiments**

[Description of embodiments of present invention]

First, contents of embodiments of the present invention will be individually enumerated and described.

(1) As one aspect, an optical fiber preform production method according to the present embodiment comprises at least a glass synthesis step and a pretreatment step executed prior to the glass synthesis step, to produce a core preform. In the glass synthesis step, a glass preform to be the core preform which extends along a center axis and constitutes a part of an optical fiber preform and in which a refractive index profile defined along a radial direction on a cross-section orthogonal to the center axis is adjusted to a predetermined shape, is produced.
Particularly, in the glass synthesis step, as the glass preform, glass particles synthesized while a doping amount of a refractive index adjusting agent M is adjusted are sequentially stacked on an inner peripheral surface or an outer peripheral surface of a glass deposition substrate extending along a direction matched with the center axis. As a result, the glass preform having a cross-section in which a plurality of glass layers are concentrically arranged so as to be matched with the cross-section of the core preform and surround the center axis is produced. Further, in the pretreatment step, setting of a division section to be an unit of doping amount control for the refractive index adjusting agent M, creation of glass synthesis actual-result data, calculation of a correlation, and determination of a theoretical doping amount of the refractive index adjusting agent M in the glass synthesis step are performed for an arbitrarily set adjustment region of a core preform sample produced in the past. In the setting of the division section, for one of a cross-section of an i-th (=1 to m) core preform sample among m (an integer of 2 or more) core preform samples produced in the past and the number of glass layers constituting an i-th glass preform sample having become the i-th core preform sample, the adjustment region is divided into n (an integer of 2 or more) sections along the radial direction and for the other, a region corresponding to the adjustment region is divided along the radial direction to correspond to the n division sections divided as described above on one-to-one basis. For the adjustment region, an entire range of the core preform sample along the radial direction may be set or a part thereof may be set. The division sections in the set adjustment region may be sections divided equally or sections with different sizes along the radial direction. Further, a plurality of adjustment regions may be set in a state of being continuous or separated. A division section size of a certain adjustment region among the plurality of adjustment regions does not need to be matched with a division section size of other adjustment region. In this case, rough doping amount adjustment (a division size is set to be large) can be performed at the side of the center axis of the core preform to be produced, whereas fine doping amount adjustment (the division size is set to be small) can be performed at the outer side.
The glass synthesis actual-result data includes actual measurement data of a relative refractive index difference of a k-th (=1 to n) division section in the i-th core preform sample as refractive index profile data and includes doping amount data of the refractive index adjusting agent M added to the k-th division section in the i-th glass preform sample as production condition data. In the calculation of the correlation, a correlation between a deviation of the actual measurement data of the relative refractive index difference with respect to a target value and the doping amount data of the refractive index adjusting agent M is calculated from glass synthesis actual-result data of the k-th division section of each of the m core preform samples. In the determination of the theoretical doping amount, a theoretical doping amount of the refractive index adjusting agent M in which an absolute value of the deviation is minimized is obtained from the correlation in the k-th division section of each of the m core preform samples.
In the glass synthesis step, one or more glass layers belonging to a k-th glass synthesis section corresponding to the k-th division section of each of the m core preform samples are sequentially formed on the inner peripheral surface or the outer peripheral surface of the glass deposition substrate, in a state in which the doping amount of the refractive index adjusting agent M to be supplied at the time of synthesizing the glass particles is adjusted to the theoretical doping amount.
(2) As one aspect of the present embodiment, an outer periphery radius $r_k$ of the k-th division section to be an index representing the k-th division section in the i-th core preform sample and a k-th glass synthesis section $l_k$ in the i-th glass preform sample preferably satisfy a relation of the following expression (1) by a predetermined function f.

$$\begin{cases} r_k = f(l_k) \\ l_k = f^{-1}(r_k) \end{cases} \quad \cdots (1)$$

Where the doping amount of the refractive index adjusting agent M in the k-th division section of the i-th core preform sample to be the glass synthesis actual-result data of the i-th core preform sample is set to $M(r_k)_i$ and a deviation

of the relative refractive index difference in the k-th division section of the i-th core preform sample is set to $\varepsilon(r_k)_i$, a theoretical doping amount $M(r_k)_{opt}$ of the refractive index adjusting agent M in the k-th division section of the core preform to be produced is preferably given by the following expression (2), and a theoretical doping amount $M(l_k)_{opt}$ of the refractive index adjusting agent M in the k-th glass synthesis section $l_k$ to be produced in the glass preform to be the core preform is preferably given by the theoretical doping amount $M(r_k)_{opt}$ of the refractive index adjusting agent M in $r_k$ associated with $l_k$ by the above expression (1).

$$M(r_k)_{opt} = \frac{\left(\sum_{i=1}^{m} M(r_k)_i^2\right)\left(\sum_{i=1}^{m} \varepsilon(r_k)_i\right) - \left(\sum_{i=1}^{m} M(r_k)_i\right)\left(\sum_{i=1}^{m} M(r_k)_i \cdot \varepsilon(r_k)_i\right)}{\left(\sum_{i=1}^{m} M(r_k)_i\right)\left(\sum_{i=1}^{m} \varepsilon(r_k)_i\right) - m\left(\sum_{i=1}^{m} M(r_k)_i \cdot \varepsilon(r_k)_i\right)} \quad \cdots (2)$$

(3) As one aspect of the present embodiment, the refractive index adjusting agent M preferably includes one kind of dopant. Further, as one aspect of the present embodiment, the refractive index adjusting agent M preferably includes germanium.

(4) As one aspect of the present embodiment, the refractive index adjusting agent M may include one kind of first dopant and one or more kinds of second dopants. In this case, in the glass synthesis step, a doping amount of the first dopant is preferably adjusted for each glass synthesis section to be formed, in a state in which doping conditions of the second dopants are fixed during a period where n glass synthesis sections are formed. As one aspect of the present embodiment, the refractive index adjusting agent M preferably includes two or more kinds of dopants selected from germanium, phosphorus, fluorine, and boron. As one aspect of the present embodiment, the first dopant preferably includes germanium.

(5) As one aspect of the present embodiment, the optical fiber preform production method may further include a sintering step of sintering the glass preform to cause the glass preform produced by the glass synthesis step to be transparent.

(6) As one aspect, an optical fiber production method according to the present embodiment, which however does not form part of the claimed invention, produces a desired optical fiber by preparing the optical fiber preform including the core preform produced by the optical fiber preform production method and drawing one end of the optical fiber preform while heating one end. In this case, the optical fiber to be produced includes a core extending along the center axis and a cladding covering an outer peripheral surface of the core along the center axis. In addition, a deviation of a refractive index profile in the core of the optical fiber from a target refractive index profile is preferably 0.002% or less as a relative refractive index difference with respect to a refractive index of pure silica glass.

(7) As one aspect, an optical fiber production method according to the present embodiment, which however does not form part of the claimed invention, may produce an MMF by preparing the optical fiber preform produced by the optical fiber preform production method and including a core preform having a refractive index profile according to an $\alpha$-profile along the radial direction orthogonal to the center axis and drawing one end of the optical fiber preform while heating one end. In this case, the MMF to be produced includes a core extending along the center axis and a cladding covering an outer peripheral surface of the core along the center axis. To guarantee broadband optical transmission, in the MMF, an $\alpha$ value defining the shape of the $\alpha$-profile is preferably in a range of 1.9 to 2.3. In addition, an effective bandwidth EMB($\lambda$) at an arbitrary wavelength $\lambda$(nm) included in a range of 800 to 1000 nm is preferably $-20 \cdot \lambda + 21700$ MHz·km or more.

Each aspect enumerated in the "description of embodiments of present invention" can be applied to all of the remaining aspects or all combinations of these remaining aspects.

[Details of embodiments of present invention]

Specific examples of the optical fiber preform production method according to the present invention and the optical fiber production method according to the embodiments of the present disclosure will be described in detail below with reference with the accompanying drawings. It should be noted that the embodiments of the present invention are not limited to these examples, but are indicated by claims and it is intended to include all changes in meanings and ranges equivalent to the claims. In the description of the drawings, the same elements are denoted by the same reference numerals and redundant explanations are omitted.

Fig. 1A is a diagram showing a structure of an optical fiber preform, Fig. 1B shows a refractive index profile along a radial direction of the optical fiber preform of Fig. 1A, Fig. 1C is a diagram showing a drawing step of the optical fiber preform of Fig. 1A, and Fig. ID is a diagram showing a cross-sectional structure of an optical fiber obtained through the drawing step of Fig. 1C.

An optical fiber preform 100 shown in Fig. 1A is configured to include a core preform 10 extending along a center axis AX and having a radius a and a cladding preform (outer peripheral portion) 20 provided on an outer peripheral surface of the core preform 10. The core preform 10 corresponds to a core 110A (Fig. ID) of an optical fiber 110 obtained by drawing the optical fiber preform 100 and the cladding preform 20 corresponds to a cladding 110B (Fig. ID) of the optical fiber 110.

Further, as shown in Fig. 1B, a refractive index profile 150 of the core preform 10 of which shape is defined on a cross-section orthogonal to the center axis AX has a shape according to an $\alpha$-profile. In the following description, a relative refractive index of a certain region is set to n, a refractive index of pure silica glass is set to $n_0$, and a relative refractive index difference $\Delta$ of the region is represented by the following expression (3).

$$\Delta = \left\{1 - \left(n_0/n\right)^2\right\}/2 \qquad \cdots(3)$$

Further, the $\alpha$-profile refers to a refractive index profile where a radius with the center axis AX as an origin is set to r, a core radius is set to a, a relative refractive index difference on the center axis AX is set to $\Delta_0$, a relative refractive index difference in a core outer edge is set to $\Delta_{0e}$, a relative refractive index difference in the cladding 110B is set to $\Delta_1$, and a relative refractive index difference $\Delta$ between the core 110A and the cladding 110B is represented by the following expression (4). Even if there are variations in additive concentrations caused by production and variations in refractive indexes due to mixing of impurities, the refractive index profile may be regarded as the $\alpha$-profile roughly in accordance with the expression (4).

$$\Delta(r) = \begin{cases} \Delta_0 \left\{1 - \left(r/a\right)^\alpha\right\} + \Delta_{0e} & \left(r \le a\right) \\ \\ \Delta_1 & \left(a < r\right) \end{cases} \qquad \cdots(4)$$

In an example of Fig. 1B, the refractive index of the core 110A on the center axis AX is $n_1$, the refractive index of the cladding 110B is $n_0$, and the refractive indexes of the core outer edge and the cladding 110B are matched. Therefore, in the example of Fig. 1B, $\Delta_{0e} = \Delta_1 = 0$ is satisfied.

One end of the optical fiber 110 having the above structure is heated by a heater 300 and softened, as shown in Fig. 1C. At this time, the softened one end is drawn in a direction shown by an arrow S1, so that the optical fiber 110 including the core 110A extending along the center axis AX and the cladding 110B provided on the outer peripheral surface of the core 110A is obtained. At this time, a deviation of the refractive index profile in the core 110A of the optical fiber 110 from a target refractive index profile is 0.002% or less as the relative refractive index difference with respect to the refractive index of the pure silica glass. Further, the obtained optical fiber 110 is an MMF having a graded-index (GI) type refractive index profile according to the $\alpha$-profile as shown in Fig. 1B. At this time, to guarantee broadband optical transmission, an $\alpha$ value that defines the shape of the $\alpha$-profile is preferably in a range of 1.9 to 2.3. In addition, an effective bandwidth EMB($\lambda$) at an arbitrary wavelength $\lambda$(nm) included in a range of 800 to 1000 nm is preferably -20·$\lambda$+21700MHz·km or more. It should be noted that a preferable effective bandwidth depends on a wavelength because material dispersion is considered. At the wavelength of 800 to 1000 nm, because the material dispersion decreases almost linearly as the wavelength increases, the effective bandwidth may be narrower when the wavelength is longer.

The bandwidth of the MMF depends on how a plurality of waveguide modes of the MMF are excited by a light source. As an index representing a typical bandwidth when the mode is excited by a surface emitting type semiconductor laser (VCSEL: Vertical Cavity Surface Emitting Laser) widely used as a light source in short distance information communication, an effective modal bandwidth (EMB) is defined. The EMB is obtained by the following expression (5) by calculating a calculated minimum effective modal bandwidth (minEMBc) from a measurement result of a differential mode delay (DMD) of the MMF. The details of this calculation method are defined in IEC 60793-1-49:2006 and IEC 60793-2-10:2011.

$$\text{EMB} = 1.13 \times \min \text{EMBc} \qquad \cdots(5)$$

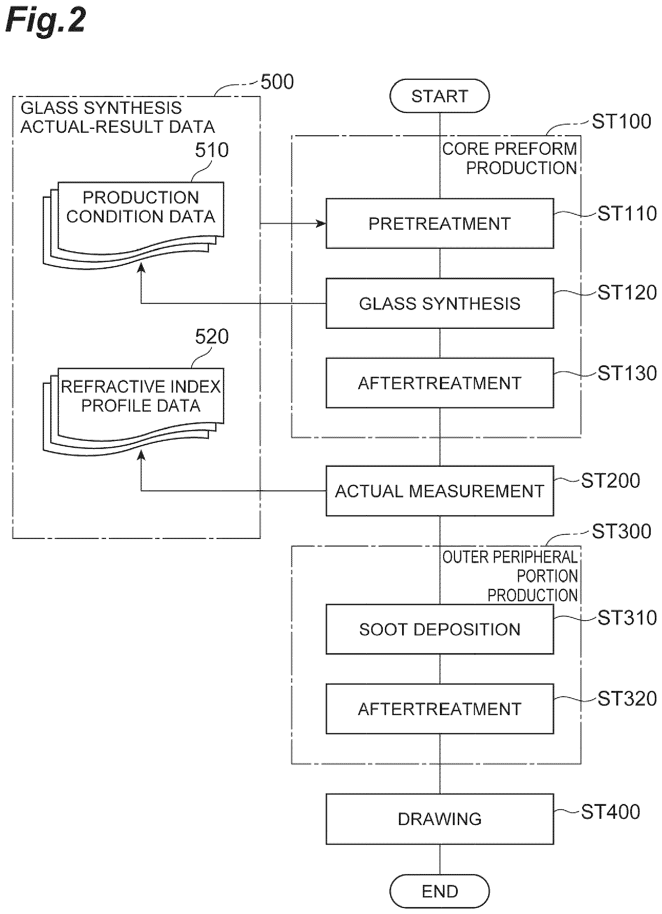

Next, Fig. 2 is a flowchart illustrating an optical fiber preform production method according to the present embodiment.

The optical fiber preform production method according to the present embodiment includes a core preform production step ST100, an actual measurement step ST200 of acquiring refractive index profile data of the core preform 10 obtained through the core preform production step ST100, an outer peripheral portion production step (cladding preform production step) ST300 of forming the cladding preform 20 to be the cladding 110B on an outer peripheral surface of the obtained core preform 10, and a drawing step ST400 of drawing the optical fiber preform 100 obtained through the outer peripheral portion production step ST300 as shown in Fig. 1C. The outer peripheral portion production step ST300 includes a soot deposition step ST310 of depositing glass particles on the outer peripheral surface of the core preform 10 through the actual measurement step ST200 and an aftertreatment step ST320.

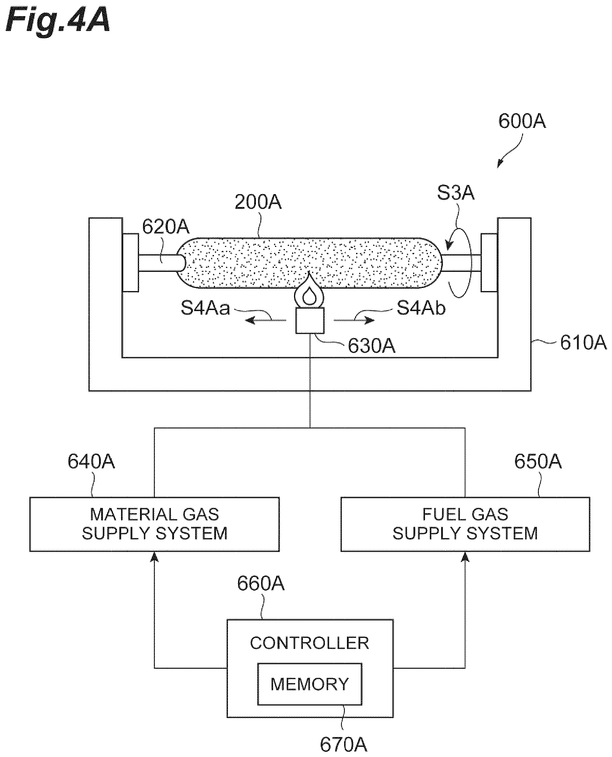

The core preform production step ST100 includes a pretreatment step ST110, a glass synthesis step ST120, and an aftertreatment step ST130. In the pretreatment step ST110, setting of n (an integer of 2 or more) glass synthesis sections which are divided in advance and of which each section functions as an unit of doping amount control for a refractive index adjusting agent in the glass synthesis step ST120, creation of glass synthesis actual-result data 500 to determine the doping amount of the refractive index adjusting agent to be doped with each glass synthesis section, calculation of a correlation between past doping amount data and a deviation (error of the doping amount with respect to a target value) thereof, and determination of a theoretical doping amount of the refractive index adjusting agent for each glass synthesis section are performed. The glass synthesis actual-result data 500 includes refractive index profile data 520 measured in the actual measurement step ST200 for each of m (an integer of 2 or more) core preform samples produced in the past and production condition data 510 of m glass preform samples that have become the m core preform samples. In the present specification, the m glass preforms which are produced in the past and of which the production condition data is already stored in a memory (refer to Fig. 4A and the like) of a controller to be described later are referred to as the "glass preform samples" and the m core preforms which are obtained by performing the aftertreatment step to be described later on the m glass preform samples and of which the refractive index profile data is already stored in the memory of the controller are referred to as the "core preform samples" as core preforms produced in the past.

In the glass synthesis step ST120, as the glass preform to be the core preform 10, the glass particles synthesized while the doping amount of the refractive index adjusting agent is adjusted are sequentially stacked on an inner peripheral surface or an outer peripheral surface of a glass deposition substrate extending along a direction matched with the center axis AX. As a result, the glass preform having the cross-section in which a plurality of glass layers are concentrically arranged so as to be matched with the cross-section of the core preform 10 and surround the center axis AX is produced. It should be noted that each glass synthesis section to be an unit of doping amount control for the refractive index adjusting agent includes one or more glass layers. In addition, the doping amount of the refractive index adjusting agent in each glass synthesis section in the glass synthesis step ST120 is added to the production condition data 510 together with past data.

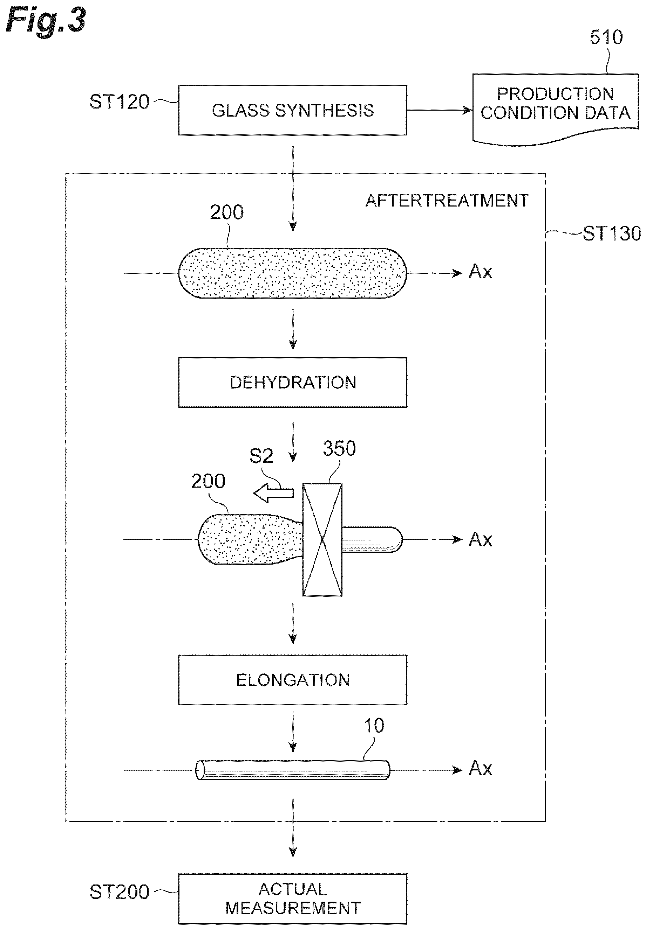

Fig. 3 is a flowchart illustrating the aftertreatment step ST130 in the core preform production step ST100 shown in Fig. 2. In the aftertreatment step ST130, as shown in Fig. 3, the glass preform 200 obtained through the glass synthesis step ST120 is dehydrated. The dehydrated glass preform 200 is sintered so as to be transparent. Specifically, the glass preform 200 is heated while the heater 350 is moved in a direction shown by an arrow S2. When the glass preform 200 has a hollow structure, collapse (solidification) is also performed. When an inside approach type of CVD method is applied to the glass synthesis step ST120, in the glass synthesis step ST120, every time a glass layer is deposited, the deposited glass layer is caused to be transparent, so that the dehydration step is unnecessary after the glass synthesis step ST120. Further, the transparent preform is extended to have a desired outer diameter, so that the core preform 10 is obtained. The refractive index profile of the obtained core preform 10 is measured by the actual measurement step ST200 and the measurement data is added to the refractive index profile data 520 together with the past data. Also in the aftertreatment ST320 in the outer peripheral portion production step ST300, the same treatment as the aftertreatment step ST130 is performed on the soot deposition layer (glass layer) formed on the outer peripheral surface of the core preform 10 through the soot deposition step ST310 and the cladding preform 20 is obtained.

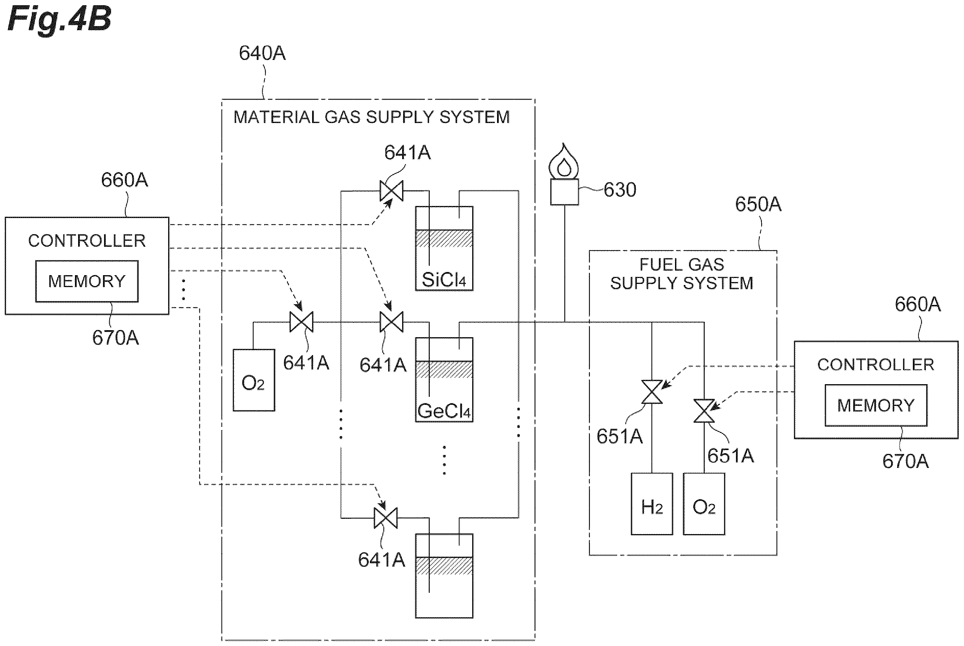

The glass preform 200 in the glass synthesis step ST120 is produced by a production apparatus shown in Figs. 4A and 4B, for example. Fig. 4A shows a structure of an OVD production apparatus for executing the glass synthesis step ST120 by using the OVD method as the outside approach type of CVD method for forming the glass layer on the outer peripheral surface of the glass deposition substrate and Fig. 4B shows a structure of a material gas supply system in the OVD production apparatus of Fig. 4A.

The OVD production apparatus 600A of Fig. 4A includes a workbench 610A, a core rod 620A, an oxyhydrogen burner 630A, a material gas supply system 640A, a fuel gas supply system 650A, and a controller 660A. The core rod 620A is the glass deposition substrate. The oxyhydrogen burner 630A deposits the glass particles synthesized in flames on a surface of the core rod 620A, thereby forming an intermediate glass preform 200A including a plurality of glass layers on an outer peripheral surface of the core rod 620A. The workbench 610A rotates the core rod 620A in a direction shown by an arrow S3A while supporting the core rod 620A and moves the oxyhydrogen burner 630A in directions shown by arrows S4Aa and S4Ab while supporting the oxyhydrogen burner 630A. The material gas supply system 640A supplies glass raw material gas ($SiCl_4$, $GeCl_4$, or the like) to the oxyhydrogen burner 630A. The fuel gas supply system 650A supplies fuel gas ($H_2$ or $O_2$) for forming flames to the oxyhydrogen burner 630A. The controller 660A controls each of the workbench 610A, the material gas supply system 640A, and the fuel gas supply system 650A. The controller 660A has a memory 670A to store the glass synthesis actual-result data 500 of the m core preform samples produced in the past.

As shown in Fig. 4B, the material gas supply system 640A includes an $O_2$ tank, a $SiCl_4$ tank storing $SiCl_4$ to be a glass synthesis material, a $GeCl_4$ tank storing a Ge compound to be the refractive index adjusting agent, and the like and these tanks are connected via a mixing valve 641A. The controller 660A controls opening and closing of the mixing valve 641A and a flow rate adjuster not shown in the drawings and adjusts a flow rate of the glass raw material gas, in particular, a flow rate (doping amount) of the refractive index adjusting agent. In an example of Fig. 4B, although germanium (Ge) is shown as the refractive index adjusting agent, the refractive index adjusting agent may include two or more kinds of dopant selected from germanium (Ge), phosphorus (P), fluorine (F), and boron (B). In addition, Ge and the other refractive index adjusting agents (P, F, and B) may be prepared as first and second dopants, respectively, and the controller 660A may adjust a doping amount of the first dopant for each glass synthesis section to be formed, in a state in which doping conditions of the second dopants are fixed during a period where each glass synthesis section is formed.

On the other hand, as shown in Fig. 4B, the fuel gas supply system 650A has the $O_2$ tank and the $H_2$ tank and the controller 660A adjusts a flow rate of $O_2$ and a flow rate of $H_2$ through the mixing valve 651A and the flow rate adjuster not shown in the drawings.

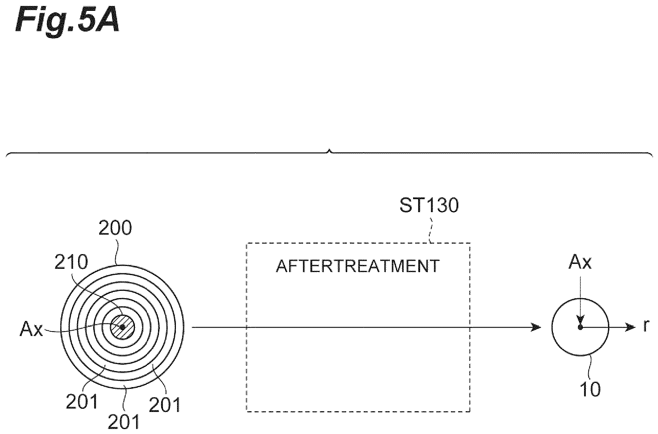

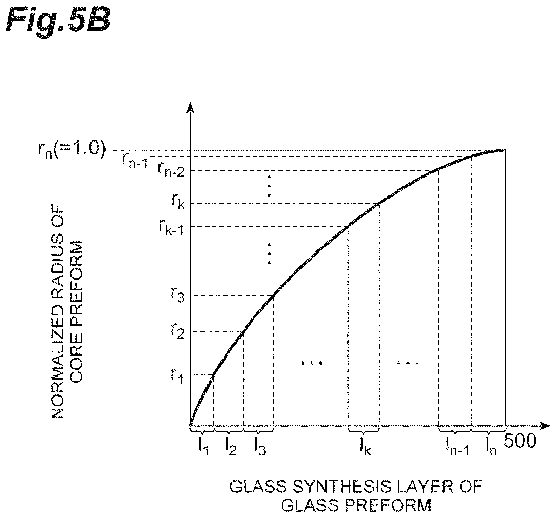

As shown on a left side of Fig. 5A, the glass preform 200 produced by the OVD production apparatus 600A having the above structure has a cross-sectional structure in which a space (space from which the core rod 620A has been removed) 210 is provided in a center and a plurality of glass layers 201 are stacked on a concentric circle. By performing the aftertreatment step ST130 on the glass preform 200 having the above cross-sectional structure, the core preform 10 having a cross-sectional structure shown on a right side of Fig. 5A is obtained. Fig. 5B is a diagram showing an example of a correspondence relation between a division period in the cross-section of the glass preform 200 after the glass synthesis step ST120 and a division section in the cross-section of the core preform 10 obtained by performing the aftertreatment step ST130 on the glass preform 200. In the following description, an example in which an adjustment region to be section divided is set over an entire range of the core preform 10 along a radial direction is mentioned.

In the optical fiber preform production method according to the present embodiment, in the glass synthesis step ST120, the entire region of the doping amount adjustment section (glass synthesis section) of the refractive index adjusting agent is divided into the n sections as the adjustment region and optimization control of the flow rate (Ge doping amount) of $GeCl_4$ by the controller 660A is performed for each of the divided glass synthesis sections. Each glass synthesis section corresponds to a layer region including one or more glass layers 201 in the cross-section of each of the m glass preform samples 200 produced in the past. In addition, the glass synthesis section may be a section obtained by equally dividing the number (for example, 500 layers) of glass layers 201 constituting the produced glass preform sample 200 by n along the radial direction or may be obtained by equally dividing the cross-section radius of the m core preform samples 10 produced in the past by n. Fig. 5B shows a graph showing a correspondence relation between a glass synthesis section $l_k$ (k=1 to n) when the cross-section of the glass preform sample 200 is equally divided by n in the radial direction and a radial section $r_k$ (k=1 to n) of the core preform sample 10 obtained from the glass preform 200. It is considered that the correspondence relation between the glass synthesis section of the glass preform sample and the radial section of the core preform sample is not linear as shown in Fig. 5B, because a shrinkage ratio at the time of sintering is different between a center portion and a peripheral portion of the glass preform sample. In addition, $r_k$ is an outer diameter of each radial section of the core preform sample 10 and is also an index representing each radial section. Therefore, an outer periphery radius $r_k$ representing a k-th (=1 to n) division section in an i-th (=1 to m) core preform sample among the m core preform samples 10 and a k-th glass synthesis section $l_k$ in an i-th glass preform sample having become the i-th core preform sample satisfy the relation of the above expression (1) by a predetermined function f. Here, if easiness of mutual conversion between $r_k$ and $l_k$ is considered, the function f is preferably a function in which it is easy to find an inverse function.

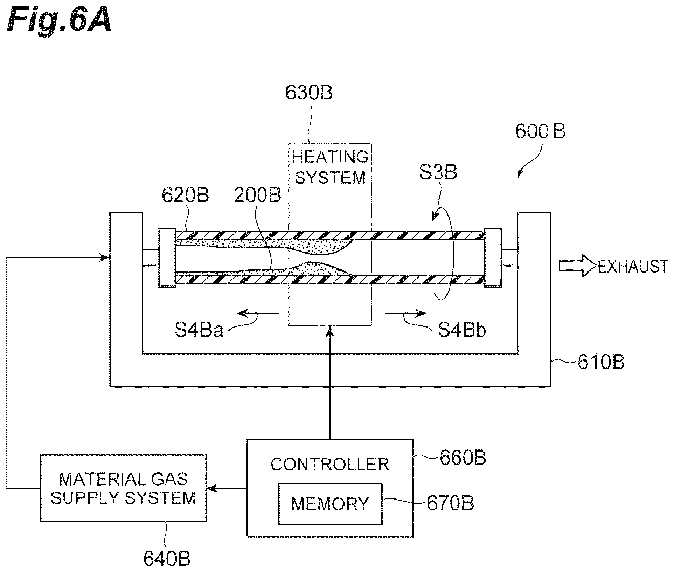

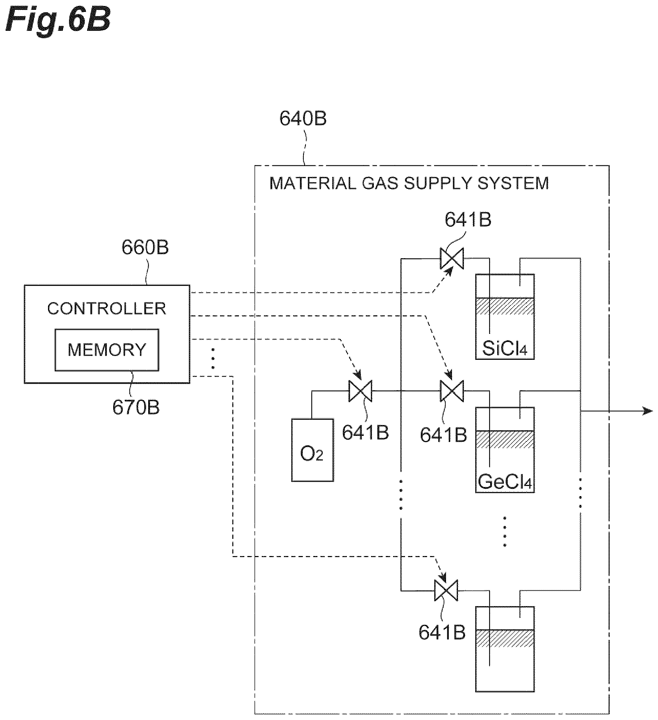

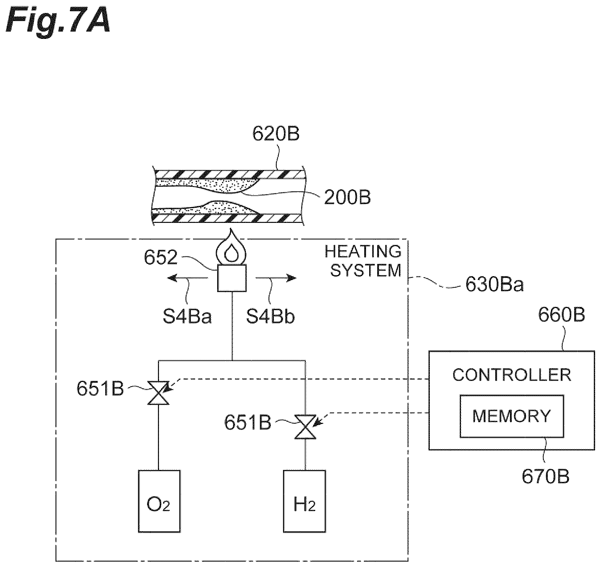

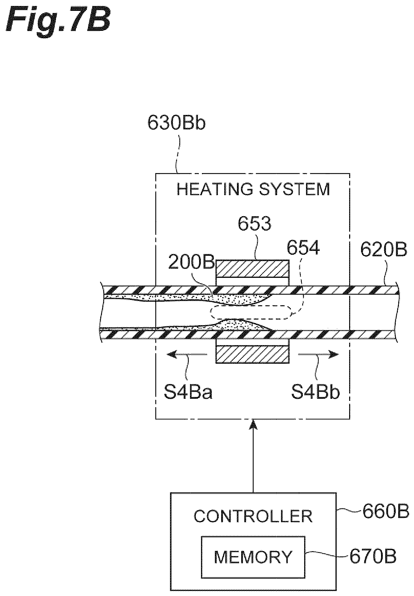

The OVD production apparatus 600A for executing the glass synthesis step ST120 is an apparatus for producing the glass preform 200 by the so-called outside approach type of CVD method. However, the glass preform 200 for the core preform can be produced by the inside approach type of CVD method represented by an MCVD method or a PCVD method. Fig. 6A is a diagram showing a structure of the inside approach type of CVD production apparatus and Fig. 6B is a diagram showing a structure of a material gas supply system in the inside approach type of CVD production apparatus of Fig. 6A. In addition, Fig. 7A is a diagram showing a structure of a heating system for executing the MCVD method in the inside approach type of CVD production apparatus of Fig. 6A and Fig. 7B is a diagram showing a structure of a heating system for executing the PCVD method in the inside approach type of CVD production apparatus of Fig. 6A.

An inside approach type of CVD production apparatus 600B of Fig. 6A includes a workbench 610B, a hollow glass tube 620B, a heating system 630B, a material gas supply system 640B, and a controller 660B. The hollow glass tube 620B is a glass deposition substrate in which a plurality of glass layers are stacked on an inner peripheral surface thereof. The heating system 630B has different structures in the MCVD method and the PCVD method to be described later. However, even if any one of the MCVD method and the PCVD method is used, the glass particles synthesized in the hollow glass tube 620B are deposited on the inner peripheral surface of the hollow glass tube 620B, so that an intermediate glass preform 200B including a plurality of glass layers is formed. The workbench 610B rotates the hollow glass tube 620B in a direction shown by an arrow S3B while supporting the hollow glass tube 620B and moves the heating system 630B in directions shown by arrows S4Ba and S4Bb while supporting the heating system 630B. The material gas supply system 640B supplies glass raw material gas ($SiCl_4$, $GeCl_4$, or the like) to the heating system 630B. The controller 660B controls each of the heating system 630B, the workbench 610B, and the material gas supply system 640B. The controller 660B has a memory 670B to store the glass synthesis actual-result data 500 of the m core preform samples produced in the past.

As shown in Fig. 6B, the material gas supply system 640B includes an $O_2$ tank, a $SiCl_4$ tank storing $SiCl_4$ to be a glass synthesis material, a $GeCl_4$ tank storing a Ge compound to be the refractive index adjusting agent, and the like and these tanks are connected via a mixing valve 641B. The controller 660B controls opening and closing of the mixing valve 641B and a flow rate adjuster not shown in the drawings and adjusts a flow rate of the glass raw material gas, in particular, a flow rate (doping amount) of the refractive index adjusting agent. In an example of Fig. 6B, although germanium (Ge) is shown as the refractive index adjusting agent, the refractive index adjusting agent may include two or more kinds of dopants selected from germanium (Ge), phosphorus (P), fluorine (F), and boron (B), similar to the example of Fig. 4B. In addition, Ge and the other refractive index adjusting agents (P, F, and B) may be prepared as first and second dopants, respectively, and the controller 660B may adjust a doping amount of the first dopant for each glass synthesis section to be formed, in a state in which doping conditions of the second dopants are fixed during a period where each glass synthesis section is formed.

When the inside approach type of CVD production apparatus 600B of Fig. 6A produces the glass preform 200 by the MCVD method, the inside approach type of CVD production apparatus 600B includes a heating system 630Ba as shown in Fig. 7A. That is, the heating system 630Ba has an oxyhydrogen burner 652 that is moved in directions shown by arrows S4Ba and S4Bb while being supported by the workbench 610B and an $O_2$ tank and an $H_2$ tank that supply fuel gas ($H_2$ and $O_2$) for flame formation to the oxyhydrogen burner 652. The controller 660B adjusts the flow rates of $O_2$ and/or $H_2$ through the mixing valve 651B and a flow rate adjuster not shown in the drawings. Thereby, the glass particles synthesized in the hollow glass tube 620B are deposited on the inner peripheral surface of the hollow glass tube 620B and as a result, the intermediate glass preform 200B is formed.

On the other hand, when the inside approach type of CVD production apparatus 600B of Fig. 6A produces the glass preform 200 by the PCVD method, the inside approach type of CVD production apparatus 600B includes a heating system 630Bb as shown in Fig. 7B. That is, the heating system 630Bb has a high-frequency cavity 653 that is moved in the directions shown by arrows S4Ba and S4Bb while being supported by the workbench 610B. The high-frequency cavity 653 is disposed to surround outer periphery of the hollow glass tube 620B and can generate plasma 654 in the hollow glass tube 620B, according to a control signal from the controller 660B. Thereby, the glass particles synthesized in the hollow glass tube 620B are deposited on the inner peripheral surface of the hollow glass tube 620B and as a result, the intermediate glass preform 200B is formed.

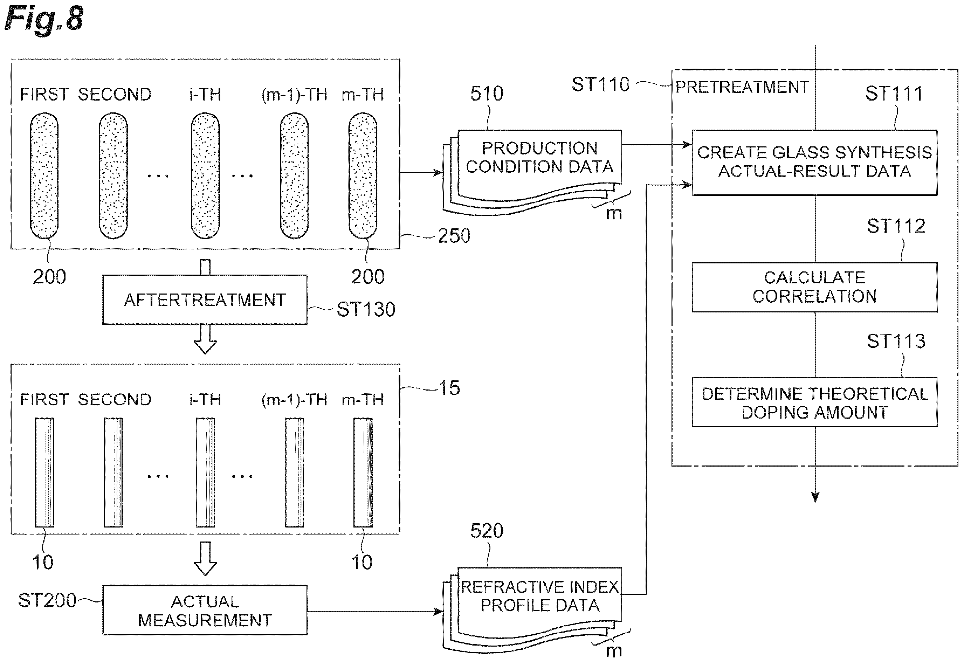

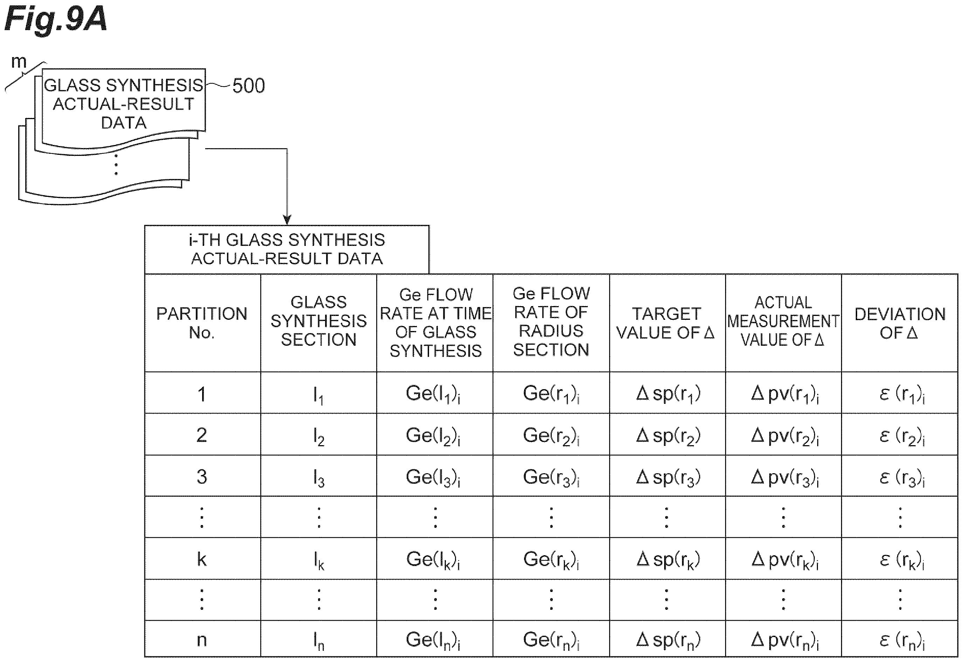

Fig. 8 is a flowchart illustrating the pretreatment step ST110 in the core preform production step ST100 shown in Fig. 2. The pretreatment step ST110 is a step executed by the controller 660A and 660B. In the pretreatment step ST110, since the doping amount of the refractive index adjusting agent for each division section to be the unit of doping amount control for the refractive index adjusting agent is determined, creation of glass synthesis actual-result data (ST111), calculation of a correlation (ST112), and determination of a theoretical doping amount of the refractive index adjusting agent (ST113) are performed. The division section is set according to the example of Fig. 5B. In step ST111, the glass synthesis actual-result data 500 shown in Fig. 9A is created from the production condition data 510 (stored in the memories 670A and 670B) of the m glass preform samples 200 constituting a glass preform sample group 250 and produced in the past and the refractive index profile data 520 of the m core preform samples 10 constituting a core preform sample group 15 and produced in the past, obtained through the actual measurement step ST200. For example, the i-th glass synthesis actual-result data 500 is an example in the case where the refractive index adjusting agent added at the time of glass synthesis is Ge. The i-th glass synthesis actual-result data 500 includes a Ge flow rate ($Ge(l_k)_i$) at the time of glass synthesis as production condition data 510 of an i-th glass preform sample 200, a Ge flow rate ($Ge(r_k)_i$) in a radial section $r_k$ corresponding to the glass synthesis section $l_k$, a target value ($\Delta sp(r_k)$) of a relative refractive index difference $\Delta$ in the radial section $r_k$, an actual measurement value ($\Delta pv(r_k)_i$) of the relative refractive index difference $\Delta$ in the radial section $r_k$ measured by the actual measurement step ST200, and a deviation ($\varepsilon(r_k)_i = \Delta pv(r_k)_i = \Delta sp(r_k)$) of the relative refractive index difference $\Delta$ in the radial section $r_k$, for each glass synthesis section shown by partition No. and a symbol $l_k$. A unit of the Ge flow rate is "slm".

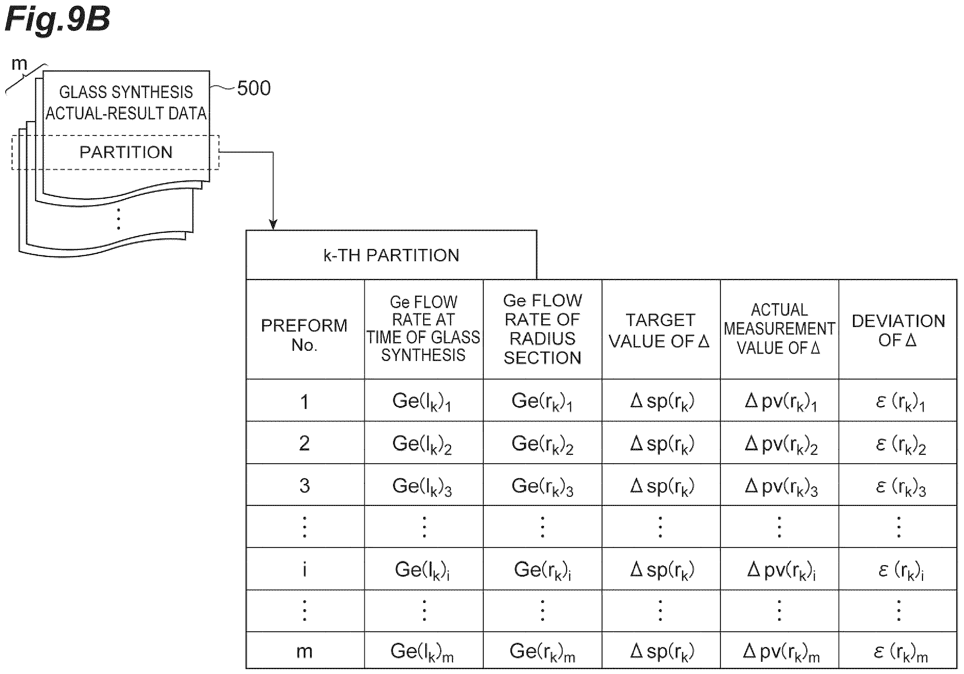

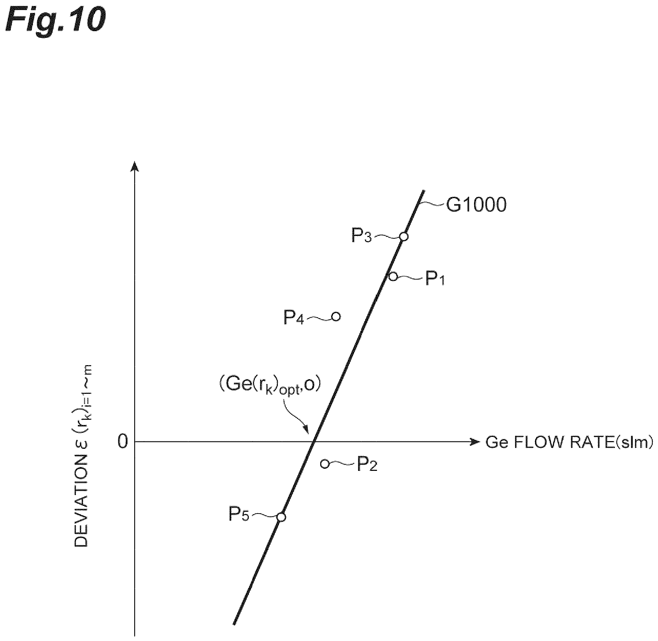

In step ST112, for each glass synthesis section, the glass synthesis actual-result data of the same glass synthesis section of each of the m glass synthesis actual-result data 500 created as described above is collected. For example, in the example of Fig. 9B, the data is collected in the glass synthesis actual-result data of the k-th glass synthesis section in each of the m core preform samples 10. In addition, in step ST112, a correlation of each data is calculated for a deviation ($\varepsilon(r_k)_{i=1\,to\,m}$) of the relative refractive index difference $\Delta$ in the k-th radial section $r_k$ in newly collected glass synthesis actual-result data and a Ge flow rate ($Ge(r_k)_{i=1\,to\,m}$ as in the example of Fig. 9B. Fig. 10 is a diagram in which each data with the Ge flow rate (slm) as an x coordinate component and the deviation $\varepsilon(r_k)_i$ as a y coordinate component is plotted in a two-dimensional coordinate system. Points $P_1$ to $P_5$ shown in Fig. 10 show respective data for correlation calculation. In the example of Fig. 10, a correlation in the case of m=5 (five core preform samples) is shown by five points $P_1(Ge(r_k)_{i=1}, \varepsilon(r_k)_{i=1})$ to $P_5(Ge(r_k)_{i=5}, \varepsilon(r_k)_{i=5})$. However, a correlation in the case of m>5 is shown by m points $P_1(Ge(r_k)_{i=1}, \varepsilon(r_k)_{i=1})$ to $P_m(Ge(r_k)_{i=m}, \varepsilon(r_k)_{i=m})$.

In step ST113, the correlation shown in Fig. 10 is linearly approximated, so that a theoretical doping amount of Ge in the k-th glass synthesis section $l_k$ is determined. That is, a square sum S(A,B) of a difference between an arbitrary point ($x_i, y_i$) and a straight line y=Ax+B (G1000 in Fig. 10) is represented by the following expression (6).

$$S(A,B) = \sum_{i=1}^{m} \left\{ (A \cdot x_i + B) - y_i \right\}^2 \quad \cdots(6)$$

The above expression (6) is expanded to find an inclination A and an intercept B of an approximation straight line G1000 in which the square sum S(A,B) is minimized. At this time, two partial differential equations represented by the following expression (7) are established. One of these partial differential equations is a linear equation that is obtained by differentiating the expansion expression of the square sum S(A,B) with respect to the inclination A and has the inclination A as a variable and the other is a linear equation that is obtained by differentiating the expansion expression of the square sum S(A,B) with respect to the intercept B and has the intercept B as a variable. Therefore, from simultaneous linear equations having the inclination A and the intercept B as variables, the inclination A and the intercept B are obtained as shown in the following expression (8).

$$\begin{cases} \dfrac{\partial S(A,B)}{\partial A} = 0 \\[2em] \dfrac{\partial S(A,B)}{\partial B} = 0 \end{cases} \quad \cdots(7)$$

$$\begin{cases} A = \dfrac{m\left(\sum\limits_{i=1}^{m} x_i \cdot y_i\right) - \left(\sum\limits_{i=1}^{m} x_i\right)\left(\sum\limits_{i=1}^{m} y_i\right)}{m\sum\limits_{i=1}^{m} x_i^2 - \left(\sum\limits_{i=1}^{m} x_i\right)^2} \\[3em] B = \dfrac{\left(\sum\limits_{i=1}^{m} x_i^2\right)\left(\sum\limits_{i=1}^{m} y_i\right) - \left(\sum\limits_{i=1}^{m} x_i\right)\left(\sum\limits_{i=1}^{m} x_i \cdot y_i\right)}{m\sum\limits_{i=1}^{m} x_i^2 - \left(\sum\limits_{i=1}^{m} x_i\right)^2} \end{cases} \quad \cdots(8)$$

Particularly, as shown in Fig. 10, an x-axis component $x_{y=0}$ at an intersection of the approximation straight line G1000 and the x axis is given by the following expression (9).

$$x_{y=0} = \dfrac{\left(\sum\limits_{i=1}^{m} x_i^2\right)\left(\sum\limits_{i=1}^{m} y_i\right) - \left(\sum\limits_{i=1}^{m} x_i\right)\left(\sum\limits_{i=1}^{m} x_i \cdot y_i\right)}{\left(\sum\limits_{i=1}^{m} x_i\right)\left(\sum\limits_{i=1}^{m} y_i\right) - m\left(\sum\limits_{i=1}^{m} x_i \cdot y_i\right)} \quad \cdots(9)$$

If the variables $x_i$ and $y_i$ in the above expression (9) are set to an doping amount $Ge(r_k)_i$ and a deviation $\varepsilon(r_k)_i$ of Ge in the k-th division section $r_k$ in the i-th core preform sample among the m core preform samples produced in the past, respectively, for $x_{y=0}$, a theoretical doping amount $Ge(r_k)_{opt}$ of Ge (the refractive index adjusting agent) in the k-th division section $r_k$ of the core preform to be produced is given by the following expression (10) and a theoretical doping amount $Ge(l_k)_{opt}$ of Ge in the k-th glass synthesis section $l_k$ in the glass preform to be the core preform is given by a theoretical doping amount $Ge(r_k)_{opt}$ of Ge in $r_k$ associated with $l_k$ by the above expression (1).

$$Ge(r_k)_{opt} = \frac{\left(\sum_{i=1}^{m} Ge(r_k)_i^2\right)\left(\sum_{i=1}^{m}\varepsilon(r_k)_i\right) - \left(\sum_{i=1}^{m} Ge(r_k)_i\right)\left(\sum_{i=1}^{m} Ge(r_k)_i \cdot \varepsilon(r_k)_i\right)}{\left(\sum_{i=1}^{m} Ge(r_k)_i\right)\left(\sum_{i=1}^{m}\varepsilon(r_k)_i\right) - m\left(\sum_{i=1}^{m} Ge(r_k)_i \cdot \varepsilon(r_k)_i\right)} \quad \cdots(10)$$

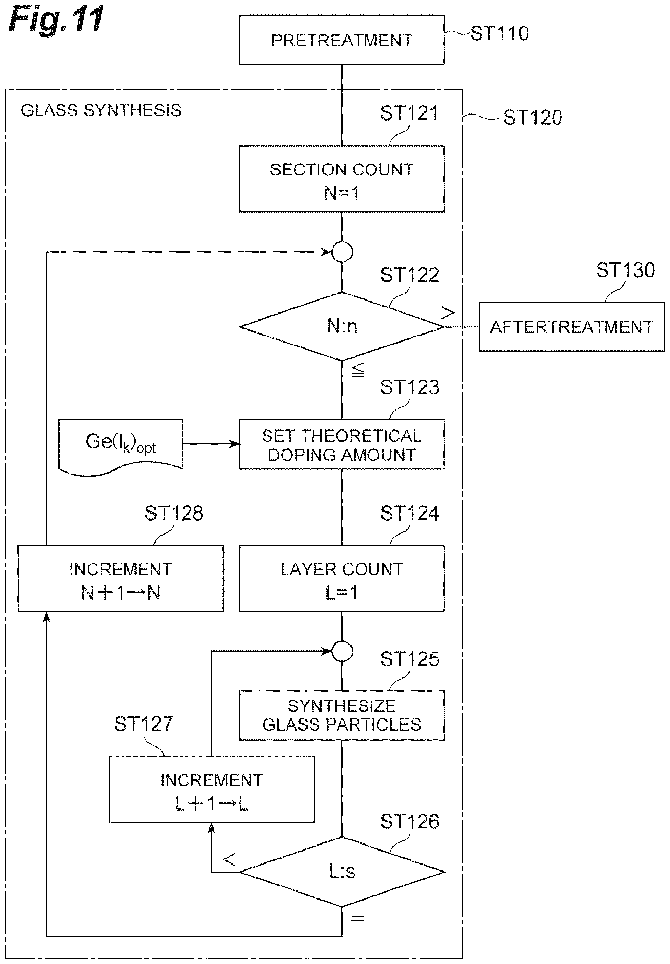

Fig. 11 is a flowchart illustrating the glass synthesis step ST120 in the core preform production step ST100 shown in Fig. 2.

As described above, if the theoretical doping amount of Ge in each glass synthesis section is determined in the pretreatment step ST110, in the glass synthesis step ST120, a counter showing the glass synthesis section to be a treatment target is initialized (ST121) and flow rate control of Ge is performed for all the glass synthesis sections (ST122 and ST128). The controllers 660A and 660B respectively control the mixing valves 641A and 641B of the material gas supply systems 640A and 640B and the flow rate adjusters so that the doping amount becomes the theoretical doping amount $Ge(l_k)_{opt}$ of the k-th glass synthesis section $l_k$ to be the treatment target (ST123). Then, a counter showing one or more glass layers belonging to the k-th glass synthesis section $l_k$ is initialized (ST124) and glass synthesis is performed (ST125) while the number of glass layers deposited on the inner peripheral surface or the outer peripheral surface of the glass deposition substrate is counted (ST126 and ST127). The glass synthesis (ST125) is performed for all the glass layers belonging to the k-th glass synthesis section $l_k$ (ST126). If the above steps ST123 to ST127 are executed for all the glass synthesis sections, the aftertreatment step ST130 is performed subsequent to the glass synthesis step ST120.

In the case where there are a plurality of glass layers belonging to the k-th glass synthesis section $l_k$, the theoretical doping amount of Ge in each glass layer belonging to the glass synthesis section $l_k$ may be constant with $Ge(l_k)_{opt}$. However, the theoretical doping amount may be changed linearly, for example, so as to gradually change toward the (k+1)-th glass synthesis section $l_{k+1}$, or may be changed in a curve shape using an arbitrary function so as to be smoothly connected.

In the above example, the adjustment region in which the equally divided division sections are set is set over the entire range of the core preform sample along the radial direction. However, the setting of the adjustment region in the present embodiment is not limited to this example. That is, a part of the core preform sample along the radial direction may be set to the adjustment region. The division sections in the set adjustment region may be sections with different sizes along the radial direction. Further, a plurality of adjustment regions may be set in a state of being continuous or separated. The division section size of a certain adjustment region among the plurality of adjustment regions may be different from the division section size of other adjustment region.

From the above description of the present invention, it is apparent that the present invention can be variously modified. Such variations cannot be regarded as departing from the scope of the present invention and improvements obvious to all those skilled in the art are included in the following claims.

**Reference Signs List**

10 ... core preform (core preform sample); 15 ... core preform sample group; 20 ... cladding preform (outer peripheral portion); 100 ... optical fiber preform; 110A ... core; 110B ... cladding; 110 ... optical fiber; 200 ... glass preform (glass preform sample); 250 ... glass preform sample group; 500 ... glass synthesis actual-result data; 510 ... production condition data; and 520 ... refractive index profile data.

**Claims**

1. An optical fiber preform production method for producing a core preform (10) which extends along a center axis (AX) and constitutes a part of an optical fiber preform (100) and in which a refractive index profile (150) defined along a radial direction on a cross-section orthogonal to the center axis (AX) is adjusted to a predetermined shape, the method comprising

a glass synthesis step (ST120) of sequentially stacking glass particles synthesized while a doping amount of a refractive index adjusting agent M is adjusted on an inner peripheral surface or an outer peripheral surface of a glass deposition substrate (620A, 620B) extending along a direction matched with the center axis (AX) to thereby produce a glass preform (200) as the glass preform (200) to be the core preform (10), the glass preform (200) having a cross-section in which a plurality of glass layers (201) are concentrically arranged so as to be matched with the cross-section of the core preform (10) and surround the center axis (AX),

wherein the optical fiber preform production method further comprises a pretreatment step (ST110) executed prior to the glass synthesis step (ST120), the pretreatment step (ST110) of:

for one of a cross-section of an i-th (=1 to m) core preform sample (10) among m (an integer of 2 or more) core preform samples (10) produced in the past and the number of the glass layers (201) constituting an i-th glass preform sample (200) having become the i-th core preform sample (10), dividing an arbitrarily set adjustment region into n (an integer of 2 or more) sections along the radial direction and for the other, dividing a region corresponding to the adjustment region along the radial direction to correspond to the n division sections on one-to-one basis;

creating glass synthesis actual-result data (500) including actual measurement data of a relative refractive index difference of a k-th (=1 to n) division section in the i-th core preform sample (10) as refractive index profile data (520) and including doping amount data of the refractive index adjusting agent M doped to the k-th division section in the i-th glass preform sample (200) as production condition data (510);

calculating a correlation between a deviation of the actual measurement data of the relative refractive index difference with respect to a target value and the doping amount data of the refractive index adjusting agent M from glass synthesis actual-result data (500) of the k-th division section of each of the m core preform samples (10); and

calculating a theoretical doping amount of the refractive index adjusting agent M in which an absolute value of the deviation is minimized from the correlation in the k-th division section of each of the m core preform samples (10), and

wherein the glass synthesis step (ST120) sequentially forms one or more glass layers (201) belonging to a k-th glass synthesis section corresponding to the k-th division section of each of the m core preform samples (10) on the inner peripheral surface or the outer peripheral surface of the glass deposition substrate (620A, 620B), in a state in which the doping amount of the refractive index adjusting agent M to be supplied at the time of synthesizing the glass particles is adjusted to the theoretical doping amount.

2. The optical fiber preform production method according to claim 1, wherein an outer periphery radius $r_k$ of the k-th division section to be an index representing the k-th division section in the i-th core preform sample (10) and a k-th glass synthesis section $l_k$ in the i-th glass preform sample (200) satisfy a relation of the following expression (1) by a predetermined function f,

$$\begin{cases} r_k = f(l_k) \\ l_k = f^{-1}(r_k) \end{cases} \quad \cdots(1)$$

where the doping amount of the refractive index adjusting agent M in the k-th division section of the i-th core preform sample (10) to be the glass synthesis actual-result data (500) of the i-th core preform sample (10) is set to $M(r_k)_i$ and a deviation of the relative refractive index difference in the k-th division section of the i-th core preform sample (10) is set to $\varepsilon(r_k)_i$, a theoretical doping amount $M(r_k)_{opt}$ of the refractive index adjusting agent M in the k-th division section of the core preform (10) to be produced is given by the following expression (2),

$$M(r_k)_{opt} = \frac{\left(\sum_{i=1}^{m} M(r_k)_i^2\right)\left(\sum_{i=1}^{m} \varepsilon(r_k)_i\right) - \left(\sum_{i=1}^{m} M(r_k)_i\right)\left(\sum_{i=1}^{m} M(r_k)_i \cdot \varepsilon(r_k)_i\right)}{\left(\sum_{i=1}^{m} M(r_k)_i\right)\left(\sum_{i=1}^{m} \varepsilon(r_k)_i\right) - m\left(\sum_{i=1}^{m} M(r_k)_i \cdot \varepsilon(r_k)_i\right)} \quad \cdots(2)$$

and a theoretical a doping amount $M(l_k)_{opt}$ of the refractive index adjusting agent M in the k-th glass synthesis section $l_k$ to be produced in the glass preform (200) to be the core preform (10) is given by the theoretical doping amount

$M(r_k)_{opt}$ of the refractive index adjusting agent M in $r_k$ associated with $l_k$ by the expression (1).

3. The optical fiber preform production method according to claim 1 or 2, wherein the refractive index adjusting agent M includes one kind of dopant.

4. The optical fiber preform production method according to any one of claims 1 to 3, wherein the refractive index adjusting agent M includes germanium.

5. The optical fiber preform production method according to claim 1 or 2, wherein the refractive index adjusting agent M includes one kind of first dopant and one or more kinds of second dopants, and
the glass synthesis step (ST120) adjusts a doping amount of the first dopant for each glass synthesis section to be formed, in a state in which doping conditions of the second dopants are fixed during a period where n glass synthesis sections are formed.

6. The optical fiber preform production method according to claim 5, wherein the refractive index adjusting agent M includes two or more kinds of dopants selected from germanium, phosphorus, fluorine, and boron.

7. The optical fiber preform production method according to claim 6, wherein the first dopant includes germanium.

8. The optical fiber preform production method according to any one of claims 1 to 7, further comprising: a sintering step of sintering the glass preform (200) to cause the glass preform (200) produced by the glass synthesis step (ST120) to be transparent.

9. The optical fiber preform production method according to any one of claims 1 to 8, wherein the glass deposition substrate (620B) includes a hollow glass tube, and
the glass synthesis step (ST120) sequentially stacks the plurality of glass layers (201) on an inner peripheral surface of the glass tube.


**Patentansprüche**

1. Herstellungsverfahren für eine optische Faservorform zum Herstellen einer Kernvorform (10), die sich entlang einer Mittelachse (AX) erstreckt und einen Teil einer optischen Faservorform (100) darstellt und bei der ein Brechungsindexprofil (150), das entlang einer radialen Richtung auf einem zu der Mittelachse (AX) orthogonalen Querschnitt definiert ist, auf eine vorbestimmte Form eingestellt wird, das Verfahren umfassend:

einen Glassyntheseschritt (ST120), bei dem nacheinander Glaspartikel gestapelt werden, die synthetisiert wurden, während eine Dotierungsmenge eines Brechungsindex-Einstellmittels M auf einer inneren Umfangsfläche oder einer äußeren Umfangsfläche eines Glasabscheidungssubstrats (620A, 620B) eingestellt wird, das sich entlang einer Richtung erstreckt, die mit der Mittelachse (AX) zusammenfällt, um dadurch eine Glasvorform (200) als Glasvorform (200), die die Kernvorform (10) sein wird, zu erzeugen, wobei die Glasvorform (200) einen Querschnitt aufweist, in dem eine Vielzahl an Glasschichten (201) konzentrisch angeordnet sind, um mit dem Querschnitt der Kernvorform (10) zusammenzufallen und die Mittelachse (AX) zu umgeben,
wobei das Herstellungsverfahren für eine optische Faservorform weiter einen Vorbehandlungsschritt (ST110) umfasst, der vor dem Glassyntheseschritt (ST120) ausgeführt wird, der Vorbehandlungsschritt (ST110) von:

für einen Querschnitt einer i-ten (= 1 bis m) Kernvorformprobe (10) unter m (eine ganze Zahl von 2 oder mehr) Kernvorformproben (10), die in der Vergangenheit hergestellt wurden, und die Anzahl der Glasschichten (201), die eine i-te Glasvorformprobe (200) bilden, die zur i-ten Kernvorformprobe (10) geworden ist, Unterteilen eines willkürlich festgelegten Einstellbereichs in n (eine ganze Zahl von 2 oder mehr) Abschnitte entlang der radialen Richtung und für das andere Unterteilen eines Bereichs, der dem Einstellbereich entlang der radialen Richtung entspricht, um den n Teilungsabschnitten eins zu eins zu entsprechen;
Erzeugen von tatsächlichen Ergebnisdaten (500) der Glassynthese, einschließlich tatsächlicher Messdaten einer relativen Brechungsindexdifferenz eines k-ten (= 1 bis n) Teilungsabschnitts in der i-ten Kernvorformprobe (10) als Brechungsindexprofildaten (520) und einschließlich Dotierungsmengen-Daten des Brechungs-index-Einstellmittels M, dotiert auf den k-ten Teilungsabschnitt in der i-ten Glasvorformprobe (200) als Produktionsbedingungsdaten (510);
Berechnen einer Korrelation zwischen einer Abweichung der tatsächlichen Messdaten der relativen Brechungsindexdifferenz in Bezug auf einen Zielwert und den Dotierungsmengen-Daten des Brechungsindex-Einstellmittels M von den tatsächlichen Ergebnisdaten (500) der Glassynthese des k-ten Teilungsabschnitts jeder der m Kernvorformproben (10); und

Berechnen einer theoretischen Dotierungsmenge des Brechungsindex-Einstellmittels M, bei der ein absoluter Wert der Abweichung von der Korrelation in dem k-ten Teilungsabschnitt jeder der m Kernvorformproben (10) minimiert wird, und

wobei der Glassyntheseschritt (ST120) nacheinander eine oder mehrere Glasschichten (201) bildet, die zu einem k-ten Glassyntheseabschnitt gehören, der dem k-ten Teilungsabschnitt jeder der m Kernvorformproben (10) auf der inneren Umfangsfläche oder der äußeren Umfangsfläche des Glasabscheidungssubstrats (620A, 620B) entspricht, in einem Zustand, in dem die Dotierungsmenge des Brechungsindex-Einstellmittels M, die zum Zeitpunkt der Synthese der Glaspartikel zuzuführen ist, auf die theoretische Dotierungsmenge eingestellt wird.

2. Herstellungsverfahren für eine optische Faservorform nach Anspruch 1, wobei ein Außenumfangsradius $r_k$ des k-ten Teilungsabschnitts, der ein Index sein soll, der den k-ten Teilungsabschnitt in der i-ten Kernvorformprobe (10) darstellt, und ein k-ter Glassyntheseabschnitt $l_k$ in der i-ten Glasvorformprobe (200) eine Beziehung des folgenden Ausdrucks (1) durch eine vorbestimmte Funktion f erfüllen,

$$\begin{cases} r_k = f(l_k) \\ l_k = f^{-1}(r_k) \end{cases} \quad \cdots (1)$$

wobei die Dotierungsmenge des Brechungsindex-Einstellmittels M in dem k-ten Teilungsabschnitt der i-ten Kernvorformprobe (10), die die tatsächlichen Ergebnisdaten (500) der Glassynthese der i-ten Kernvorformprobe (10) sein sollen, auf $M(r_k)_i$ festgelegt ist und eine Abweichung der relativen Brechungsindexdifferenz im k-ten Teilungsabschnitt der i-ten Kernvorformprobe (10) auf $\varepsilon(r_k)_i$ festgelegt wird, wobei eine theoretische Dotierungsmenge $M(r_k)_{opt}$ des Brechungsindex-Einstellmittels M im k-ten Teilungsabschnitt der herzustellenden Kernvorform (10) durch den folgenden Ausdruck (2) gegeben ist,

$$M(r_k)_{opt} = \frac{\left(\sum_{i=1}^{m} M(r_k)_i^2\right)\left(\sum_{i=1}^{m} \varepsilon(r_k)_i\right) - \left(\sum_{i=1}^{m} M(r_k)_i\right)\left(\sum_{i=1}^{m} M(r_k)_i \cdot \varepsilon(r_k)_i\right)}{\left(\sum_{i=1}^{m} M(r_k)_i\right)\left(\sum_{i=1}^{m} \varepsilon(r_k)_i\right) - m\left(\sum_{i=1}^{m} M(r_k)_i \cdot \varepsilon(r_k)_i\right)} \quad \cdots (2)$$

und eine theoretische Dotierungsmenge $M(l_k)_{opt}$ des Brechungsindex-Einstellmittels M im k-ten Glassyntheseabschnitts $l_k$, die in der Glasvorform (200) produziert werden soll um die Kernvorform (10) zu sein, durch die theoretische Dotierungsmenge $M(r_k)_{opt}$ des Brechungsindex-Einstellmittels M in $r_k$ gegeben ist, die mit $l_k$ durch den Ausdruck (1) assoziiert ist.

3. Herstellungsverfahren für eine optische Faservorform nach Anspruch 1 oder 2, wobei das Brechungsindex-Einstellmittel M eine Art eines Dotierungsmittels enthält.

4. Herstellungsverfahren für eine optische Faservorform nach einem der Ansprüche 1 bis 3, wobei das Brechungsindex-Einstellmittel M Germanium enthält.

5. Herstellungsverfahren für eine optische Faservorform nach einem der Ansprüche 1 oder 2, wobei das Brechungsindex-Einstellmittel M eine Art eines ersten Dotierungsmittels enthält, und eine oder mehrere Arten von zweiten Dotierungsmitteln, und

der Glassyntheseschritt (ST120) eine Dotierungsmenge des ersten Dotierungsmittels für jeden zu bildenden Glassyntheseabschnitt einstellt, in einem Zustand, in dem die Dotierungsbedingungen der zweiten Dotierungsmittel während eines Zeitraums festgelegt sind, in dem n Glassyntheseabschnitte gebildet werden.

6. Herstellungsverfahren für eine optische Faservorform nach Anspruch 5, wobei das Brechungsindex-Einstellmittel M zwei oder mehr Arten von Dotierungsmitteln enthält, ausgewählt aus Germanium, Phosphor, Fluor und Bor.

7. Herstellungsverfahren für eine optische Faservorform nach Anspruch 6, wobei das erste Dotierungsmittel Germanium enthält.

8.  Herstellungsverfahren für eine optische Faservorform nach einem der Ansprüche 1 bis 7, weiter umfassend: einen Sinterschritt des Sinterns der Glasvorform (200), um zu bewirken, dass die durch den Glassyntheseschritt (ST120) erzeugte Glasvorform (200) transparent ist.

9.  Herstellungsverfahren für eine optische Faservorform nach einem der Ansprüche 1 bis 8, wobei das Glasabscheidungssubstrat (620B) ein hohles Glasrohr enthält, und
    der Glassyntheseschritt (ST120) nacheinander die Vielzahl an Glasschichten (201) auf einer inneren Umfangsfläche des Glasrohrs stapelt.

**Revendications**

1.  Procédé de production de préforme de fibre optique destiné à produire une préforme à noyau (10) qui s'étend le long d'un axe central (AX) et constitue une partie d'une préforme de fibre optique (100) et dans lequel un profil d'indice de réfraction (150) défini le long d'une direction radiale sur une section transversale orthogonale à l'axe centrale (AX) est ajusté à une forme prédéterminée, le procédé comprenant
    une étape de synthèse de verre (ST120) consistant à empiler séquentiellement des particules de verre synthétisées pendant qu'une quantité de dopage d'un agent d'ajustement d'indice de réfraction M est ajustée sur une surface périphérique interne ou une surface périphérique externe d'un substrat de dépôt de verre (620A, 620B) s'étendant le long d'une direction correspondant à l'axe central (AX) pour produire ainsi une préforme de verre (200), pour que la préforme de verre (200) soit la préforme à noyau (10), la préforme de verre (200) présentant une section transversale dans laquelle une pluralité de couches de verre (201) sont agencées de manière concentrique de manière à être mises en correspondance avec la section transversale de la préforme à noyau (10) et entourer l'axe central (AX),
    dans lequel le procédé de production de préforme de fibre optique comprend en outre une étape de prétraitement (ST110) réalisée avant l'étape de synthèse de verre (ST120), l'étape de prétraitement (ST110) consistant à :

    pour l'une d'une section transversale d'un i-ème échantillon de préforme à noyau (= 1 à m) parmi m (un nombre entier supérieur ou égal à 2) échantillons de préforme à noyau (10) produits dans le passé et le nombre de couches de verre (201) constituant un i-ème échantillon de préforme de verre (200) étant devenu l'i-ème échantillon de préforme à noyau (10), divisant une région d'ajustement réglée de manière arbitraire en n (un nombre entier supérieur ou égal à 2) sections le long de la direction radiale et pour l'autre, divisant une région correspondant à la région d'ajustement le long de la direction radiale pour correspondre aux sections de division n sur une base individuelle ;
    créer des données de résultat réel de synthèse de verre (500) incluant des données de mesure réelles d'une différence d'indice de réfraction relatif d'une k-ième section de division (= 1 à n) dans l'i-ème échantillon de préforme à noyau (10) en tant que données de profil d'indice de réfraction (520) et incluant des données de quantité de dopage de l'agent d'ajustement d'indice de réfraction M dopé jusqu'à la k-ème section de division dans l'i-ème échantillon de préforme de verre (200) en tant que données de conditions de production (510) ;
    calculer une corrélation entre un écart des données de mesure réelles de la différence d'indice de réfraction relatif par rapport à une valeur cible et les données de quantité de dopage de l'agent d'ajustement d'indice de réfraction M à partir des données de résultat réel de synthèse de verre (500) de la k-ème section de division de chacun des m échantillons de préforme à noyau (10) ; et
    calculer une quantité de dopage théorique de l'agent d'ajustement d'indice de réfraction M dans laquelle une valeur absolue de l'écart est minimisée à partir de la corrélation dans la k-ème section de division de chacun des m échantillons de préforme à noyau (10), et

    dans lequel l'étape de synthèse de verre (ST120) forme séquentiellement une ou plusieurs couches de verre (201) appartenant à une k-ème section de synthèse de verre correspondant à la k-ème section de division de chacun des m échantillons de préforme à noyau (10) sur la surface périphérique interne ou la surface périphérique externe du substrat de dépôt de verre (620A, 620B), dans un état dans lequel la quantité de dopage de l'agent d'ajustement d'indice de réfraction M devant être fournie au moment de la synthèse des particules de verre est ajustée à la quantité de dopage théorique.

2.  Procédé de production de préforme de fibre de verre selon la revendication 1, dans lequel un rayon périphérique externe $r_k$ de la k-ème section de division devant être un indice représentant la k-ème section de division dans l'i-ème échantillon de préforme à noyau (10) et une k-ème section de synthèse de verre $l_k$ dans l'i-ème échantillon de préforme de verre (200) satisfont à une relation de l'expression suivante (1) par une fonction f prédéterminée,

$$\begin{cases} r_k = f(l_k) \\ l_k = f^{-1}(r_k) \end{cases} \quad ...(1)$$

où la quantité de dopage de l'agent d'ajustement d'indice de réfraction M dans la k-ème section de division de l'i-ème échantillon de préforme à noyau (10) devant être les données de résultat réel de synthèse de verre (500) de l'i-ème échantillon de préforme à noyau (10) est réglée sur $M(r_k)_i$ et un écart de la différence d'indice de réfraction relatif dans la k-ème section de division de l'i-ème échantillon de préforme à noyau (10) est réglée sur $\varepsilon(r_k)_i$, une quantité de dopage théorique $M(r_k)_{opt}$ de l'agent d'ajustement d'indice de réfraction M dans la k-ème section de division de la préforme à noyau (10) devant être produite est donnée par l'expression suivante (2),

$$M(r_k)_{opt} = \frac{\left(\sum_{i=1}^{m} M(r_k)_i^2\right)\left(\sum_{i=1}^{m} \varepsilon(r_k)_i\right) - \left(\sum_{i=1}^{m} M(r_k)_i\right)\left(\sum_{i=1}^{m} M(r_k)_i \cdot \varepsilon(r_k)_i\right)}{\left(\sum_{i=1}^{m} M(r_k)_i\right)\left(\sum_{i=1}^{m} \varepsilon(r_k)_i\right) - m\left(\sum_{i=1}^{m} M(r_k)_i \cdot \varepsilon(r_k)_i\right)} \quad ...(2)$$

et une quantité de dopage théorique $M(l_k)_{opt}$ de l'agent d'ajustement d'indice de réfraction M dans la k-ème section de synthèse de verre $l_k$ devant être produit dans la préforme de verre (200) pour être la préforme à noyau (10) est donnée par la quantité de dopage théorique $M(r_k)_{opt}$ de l'agent d'ajustement d'indice de réfraction M dans $r_k$ associé à $l_k$ par l'expression (1).

3. Procédé de production de préforme de fibre optique selon la revendication 1 ou 2, dans lequel l'agent d'ajustement d'indice de réfraction M inclut un type de dopant.

4. Procédé de production de préforme de fibre optique selon l'une quelconque des revendications 1 à 3, dans lequel l'agent d'ajustement d'indice de réfraction M inclut du germanium.

5. Procédé de production de préforme de fibre optique selon la revendication 1 ou 2, dans lequel l'agent d'ajustement d'indice de réfraction M inclut un type de premier dopant et un ou plusieurs types de seconds dopants, et l'étape de synthèse de verre (ST120) ajuste une quantité de dopage du premier dopant pour chaque section de synthèse de verre devant être formée, dans un état dans lequel les conditions de dopage des seconds dopants sont fixées pendant une période où n sections de synthèse de verre sont formées.

6. Procédé de production de préforme de fibre optique selon la revendication 5, dans lequel l'agent d'ajustement d'indice de réfraction M inclut deux ou plusieurs types de dopants choisis parmi le germanium, le phosphore, le fluor et le bore.

7. Procédé de production de préforme de fibre optique selon la revendication 6, dans lequel le premier dopant inclut du germanium.

8. Procédé de production de préforme de fibre optique selon l'une quelconque des revendications 1 à 7, comprenant en outre : une étape de frittage consistant à fritter la préforme de verre (200) pour amener la préforme de verre (200) produite par l'étape de synthèse de verre (ST120) à être transparente.

9. Procédé de production de préforme de fibre optique selon l'une quelconque des revendications 1 à 8, dans lequel le substrat de dépôt de verre (620B) inclut un tube en verre creux, et l'étape de synthèse de verre (ST120) empile séquentiellement la pluralité de couches de verre (201) sur une surface périphérique interne du tube en verre.

## Fig.1A

## Fig.1B

# Fig.1C

# Fig.1D

EP 3 495 329 B1

# Fig.2

22

# Fig.3

# Fig.4A

600A

200A

S3A

620A

S4Aa

S4Ab

630A

610A

640A

650A

MATERIAL GAS
SUPPLY SYSTEM

FUEL GAS
SUPPLY SYSTEM

660A

CONTROLLER

MEMORY

670A

# Fig.4B

EP 3 495 329 B1

# *Fig.5A*

200
210
Ax

201
201
201

ST130

AFTERTREATMENT

Ax

r

10

# Fig.5B

## Fig.6A

## Fig.6B

# Fig.7A

*Fig.7B*

630Bb

HEATING SYSTEM

653

200B  654  620B

S4Ba  S4Bb

CONTROLLER  660B

MEMORY  670B

Fig.8

# Fig.9A

m
GLASS SYNTHESIS ACTUAL-RESULT DATA ~500

i-TH GLASS SYNTHESIS ACTUAL-RESULT DATA

| PARTITION No. | GLASS SYNTHESIS SECTION | Ge FLOW RATE AT TIME OF GLASS SYNTHESIS | Ge FLOW RATE OF RADIUS SECTION | TARGET VALUE OF $\Delta$ | ACTUAL MEASUREMENT VALUE OF $\Delta$ | DEVIATION OF $\Delta$ |
|---|---|---|---|---|---|---|
| 1 | $l_1$ | $Ge(l_1)_i$ | $Ge(r_1)_i$ | $\Delta sp(r_1)$ | $\Delta pv(r_1)_i$ | $\varepsilon(r_1)_i$ |
| 2 | $l_2$ | $Ge(l_2)_i$ | $Ge(r_2)_i$ | $\Delta sp(r_2)$ | $\Delta pv(r_2)_i$ | $\varepsilon(r_2)_i$ |
| 3 | $l_3$ | $Ge(l_3)_i$ | $Ge(r_3)_i$ | $\Delta sp(r_3)$ | $\Delta pv(r_3)_i$ | $\varepsilon(r_3)_i$ |
| $\vdots$ | $\vdots$ | $\vdots$ | $\vdots$ | $\vdots$ | $\vdots$ | $\vdots$ |
| k | $l_k$ | $Ge(l_k)_i$ | $Ge(r_k)_i$ | $\Delta sp(r_k)$ | $\Delta pv(r_k)_i$ | $\varepsilon(r_k)_i$ |
| $\vdots$ | $\vdots$ | $\vdots$ | $\vdots$ | $\vdots$ | $\vdots$ | $\vdots$ |
| n | $l_n$ | $Ge(l_n)_i$ | $Ge(r_n)_i$ | $\Delta sp(r_n)$ | $\Delta pv(r_n)_i$ | $\varepsilon(r_n)_i$ |

EP 3 495 329 B1

# Fig.9B

k-TH PARTITION

| PREFORM No. | Ge FLOW RATE AT TIME OF GLASS SYNTHESIS | Ge FLOW RATE OF RADIUS SECTION | TARGET VALUE OF $\Delta$ | ACTUAL MEASUREMENT VALUE OF $\Delta$ | DEVIATION OF $\Delta$ |
|---|---|---|---|---|---|
| 1 | $Ge(l_k)_1$ | $Ge(r_k)_1$ | $\Delta sp(r_k)$ | $\Delta pv(r_k)_1$ | $\varepsilon(r_k)_1$ |
| 2 | $Ge(l_k)_2$ | $Ge(r_k)_2$ | $\Delta sp(r_k)$ | $\Delta pv(r_k)_2$ | $\varepsilon(r_k)_2$ |
| 3 | $Ge(l_k)_3$ | $Ge(r_k)_3$ | $\Delta sp(r_k)$ | $\Delta pv(r_k)_3$ | $\varepsilon(r_k)_3$ |
| $\vdots$ | $\vdots$ | $\vdots$ | $\vdots$ | $\vdots$ | $\vdots$ |
| i | $Ge(l_k)_i$ | $Ge(r_k)_i$ | $\Delta sp(r_k)$ | $\Delta pv(r_k)_i$ | $\varepsilon(r_k)_i$ |
| $\vdots$ | $\vdots$ | $\vdots$ | $\vdots$ | $\vdots$ | $\vdots$ |
| m | $Ge(l_k)_m$ | $Ge(r_k)_m$ | $\Delta sp(r_k)$ | $\Delta pv(r_k)_m$ | $\varepsilon(r_k)_m$ |

*Fig.10*

## Fig.11

```
                            ┌──────────────────────┐
                            │    PRETREATMENT      │──ST110
                            └──────────────────────┘
```

GLASS SYNTHESIS                    ST121        ──ST120

```
                    ┌──────────────────────┐
                    │   SECTION COUNT      │
                    │       N=1            │
                    └──────────────────────┘
                              │
                              ○         ST122                    ST130
                              │
                        ╱──────────╲              ┌──────────────────────┐
                       ╱    N:n     ╲  >          │   AFTERTREATMENT     │
                       ╲            ╱─────────────│                      │
                        ╲──────────╱              └──────────────────────┘
                              │ ≦
                                        ST123
        ┌──────────────┐   ┌──────────────────────┐
        │  Ge(Iₖ)opt   │──▶│   SET THEORETICAL    │
        └──────────────┘   │   DOPING AMOUNT      │
                           └──────────────────────┘
                                      │
     ST128                            ST124
   ┌──────────────────┐   ┌──────────────────────┐
   │   INCREMENT      │   │    LAYER COUNT       │
   │    N+1→N         │   │       L=1            │
   └──────────────────┘   └──────────────────────┘
                                      │
                                      ○      ST125
                                      │
                           ┌──────────────────────┐
                           │    SYNTHESIZE        │
                           │   GLASS PARTICLES    │
                           └──────────────────────┘
                                      │
     ST127                            │
   ┌──────────────────┐              │
   │   INCREMENT      │              │
   │    L+1→L         │              │       ST126
   └──────────────────┘   ╱──────────╲
              │      <    ╱    L:s     ╲
              └──────────╲            ╱
                          ╲──────────╱
                              │ =
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006096608 A
- JP S5864236 A
- US 8815103 B
- US 7155098 B
- US 7759874 B
- US 6292612 B
- US 20140119701 A
- US 20130029038 A